# EUROPÄISCHE PATENTANMELDUNG

(11) **EP 4 201 585 A1**
(43) Veröffentlichungstag der Anmeldung: **28.06.2023**
(21) Anmeldenummer: 22214959.3
(22) Anmeldetag: 20.12.2022
(51) Int. Cl.: B23Q 3/155, B23B 9/02, B23B 29/034, B23Q 7/04, B23Q 39/00

(54) **MEHRSPINDELWERKZEUGMASCHINE**

(30) Priorität: 23.12.2021 DE 102021134601; 10.05.2022 DE 102022111683
(71) Anmelder: Index-Werke GmbH & Co. KG Hahn & Tessky, 73730 Esslingen (DE)
(72) Erfinder: Prust, Dirk, 73732 Esslingen (DE)
(74) Vertreter: Hoeger, Stellrecht & Partner Patentanwälte mbB

(57) **Zusammenfassung**

Um eine Mehrspindelwerkzeugmaschine umfassend ein Maschinengestell, eine am Maschinengestell um eine Spindeltrommelachse drehbar angeordnete Spindeltrommel mit mehreren Werkstückspindeln, die mit jeweils einer Werkstückaufnahme für ein in einem Arbeitsraum zu bearbeitendes Werkstück versehen sind, mehrere in dem Arbeitsraum angeordnete, insbesondere einzelne Spindelstationen zugeordnete Werkzeugträger mit jeweils einer Werkzeughalteraufnahme, in welche ein Werkzeughalter einsetzbar ist, sowie eine Maschinensteuerung zur Steuerung der Werkzeugmaschine effizienter zu gestalten, wird vorgeschlagen, dass an dem Maschinengestell eine Handhabungseinrichtung angeordnet ist, dass mit der Handhabungseinrichtung, ebenfalls gesteuert durch die Maschinensteuerung, mindestens ein Werkzeughalter in mindestens eine der Werkzeughalteraufnahmen einsetzbar und/oder aus dieser entnehmbar ist.

## Beschreibung

Die Erfindung betrifft eine Mehrspindelwerkzeugmaschine, umfassend ein Maschinengestell, eine am Maschinengestell um eine Spindeltrommelachse drehbar angeordnete Spindeltrommel mit mehreren Werkstückspindeln, die mit jeweils einer Werkstückaufnahme für ein in einem Arbeitsraum zu bearbeitendes Werkstück versehen sind, mehrere in dem Arbeitsraum angeordnete, insbesondere einzelnen Spindelstationen zugeordnete Werkzeugträger mit jeweils einer Werkzeughalteraufnahme, in welche ein Werkzeughalter einsetzbar ist, sowie eine Maschinensteuerung zur Steuerung der Werkzeugmaschine.

Derartige Mehrspindelwerkzeugmaschinen sind aus dem Stand der Technik bekannt.

Der Erfindung liegt die Aufgabe zugrunde, die Bearbeitung der Werkstücke mit einer derartigen Mehrspindelwerkzeugmaschine effizienter zu gestalten.

Diese Aufgabe wird bei einer Werkzeugmaschine der Eingangs beschriebenen Art erfindungsgemäß dadurch gelöst, dass an dem Maschinengestell eine Handhabungseinrichtung angeordnet ist, dass mit der Handhabungseinrichtung, ebenfalls gesteuert durch die Maschinensteuerung, mindestens ein Werkzeughalter in mindestens eine der Werkzeughalteraufnahmen einsetzbar und/oder aus dieser entnehmbar ist.

Der Vorteil der erfindungsgemäßen Lösung ist darin zu sehen, dass sich damit das Rüsten oder Umrüsten einer derartigen Mehrspindelwerkzeugmaschine effizienter gestalten lässt und insbesondere auch die Möglichkeit besteht, Werkzeuge, die ihre Standzeit überschritten haben, oder defekte Werkzeuge rasch auszuwechseln.

Eine Handhabungseinrichtung für die erfindungsgemäße Werkzeugmaschine kann beispielsweise eine die Werkzeughalter in einer Richtung bis zur Werkzeughalteraufnahme bewegende Handhabungseinrichtung sein.

Eine besonders vorteilhafte Lösung sieht vor, dass die Handhabungseinrichtung als eine mehrachsige Handhabungseinrichtung ausgebildet ist.

Eine derartige mehrachsige Handhabungseinrichtung ermöglicht es, den Bewegungsablauf zu optimieren, um den jeweiligen Werkzeughalter effizient in die jeweilige Werkzeughalteraufnahme einsetzen zu können.

Beispielsweise ist eine derartige mehrachsige Handhabungseinrichtung so ausgebildet, dass sie mindestens fünf, noch besser mindestens sechs Achsen aufweist.

Besonders vorteilhaft ist es, wenn die mehrachsige Handhabungseinrichtung eine Schwenkarmhandhabungseinrichtung ist.

Vorzugsweise ist die Handhabungseinrichtung so ausgebildet, dass sie auf mehrere Werkzeughalteraufnahmen zum Einsetzen und/oder Entnehmen eines Werkzeughalters zugreifen kann.

Besonders günstig ist es, wenn die Handhabungseinrichtung so ausgebildet ist, dass sie auf mehreren Spindelstationen zugeordnete Werkzeughalteraufnahmen zum Einsetzen und/oder Entnehmen des Werkzeughalters zugreifen kann.

Hinsichtlich der Bewegungsmöglichkeiten der Handhabungseinrichtung sind ebenfalls die unterschiedlichsten Lösungen denkbar.

Beispielsweise wäre es denkbar, dass die Handhabungseinrichtung quer zu den Werkzeugspindelachsen zum Einsetzen und/oder Entnehmen des jeweiligen Werkzeughalters in dem Arbeitsraum verfährt.

Eine andere vorteilhafte Lösung sieht vor, dass die Handhabungseinrichtung mit einer Bewegungskomponente parallel zu den Werkstückspindelachsen beim Einsetzen und/oder Entnehmen des jeweiligen Werkzeughalters in dem Arbeitsraum verfährt.

Dies hat den Vorteil, dass dadurch in vorteilhafter Weise ein Zugriff zu den Werkzeughalteraufnahmen mehrerer Werkzeugträger und auch insbesondere mit hoher Geschwindigkeit erfolgen kann.

In diesem Zusammenhang ist vorzugsweise vorgesehen, dass die Handhabungseinrichtung mit einer Bewegungskomponente parallel zu den Werkstückspindelachsen beim Einsetzen und/oder Entnehmen des jeweiligen Werkzeughalters in dem Arbeitsraum verfährt, um in möglichst kurzer Zeit auf möglichst verschiedene Werkzeughalteraufnahmen zugreifen zu können.

Eine konstruktiv besonders günstige Lösung sieht vor, dass die Handhabungseinrichtung von einer der Spindeltrommel abgewandten Seite des Arbeitsraums in den Arbeitsraum zum Einsetzen und/oder Entnehmen des jeweiligen Werkzeughalters einfährt.

Hinsichtlich der Anordnung der Werkzeughalteraufnahme wurden bislang keine näheren Angaben gemacht.

So sieht eine vorteilhafte Lösung vor, dass der Werkzeugträger einen die Werkzeughalteraufnahme tragenden von der Maschinensteuerung gesteuerten Werkzeugschlitten aufweist.

Insbesondere ist dabei vorgesehen, dass der Werkzeugschlitten mindestens in einer X-Bearbeitungsrichtung, vorzugsweise aber auch in weiteren Bearbeitungsrichtungen, beispielsweise einer Z-Bearbeitungsrichtung, relativ zur Werkstückspindel bewegbar ist, um das Werkstück optimal bearbeiten zu können.

Hinsichtlich des Einsetzen des Werkzeughalters in die Werkzeughalteraufnahme sind die unterschiedlichsten Möglichkeiten denkbar.

So sieht eine vorteilhafte Lösung vor, dass der Werkzeughalter in die Werkzeughalteraufnahme in einer ungefähr parallel zu einer Werkstückspindelachse der jeweiligen Werkstückspindel verlaufenden Einsetzrichtung einsetzbar ist.

Alternativ dazu sieht eine andere Lösung vor, dass der Werkzeughalter in die Werkzeughalteraufnahme in Richtung quer zu einer Werkstückspindelachse der jeweiligen Werkstückspindel verlaufenden Einsetzrichtung einsetzbar ist, die insbesondere von der Werkstückspindelachse weg verläuft.

Um den Werkzeughalter in der Werkzeughalteraufnahme nach dem Einsetzen fixieren zu können und vor dem Entnehmen die Fixierung wieder lösen zu können ist vorzugsweise vorgesehen, dass die Maschinensteuerung eine Fixiervorrichtung zur Fixierung des Werkzeughalters in der Werkzeughalteraufnahme derart steuert, dass mit dieser Fixiervorrichtung nach dem Einsetzen des Werkzeughalters in die Werkzeughalteraufnahme ein Spannen des Werkzeughalters in der Werkzeughalteraufnahme und zum Entnehmen des Werkzeughalters aus der Werkzeughalteraufnahme ein Lösen des Werkzeughalters erfolgt.

Des Weiteren ist zweckmäßigerweise vorgesehen, dass zur Bildung der Fixiervorrichtung die Werkzeughalteraufnahme und der Werkzeughalter zusammenwirkende Formschlusselemente aufweisen, welche bei einem Einsetzen des Werkzeughalters in die Werkzeughalteraufnahme formschlüssig in Eingriff bringbar sind.

Hierzu ist beispielsweise vorgesehen, dass der Werkzeugträger einen Werkzeugschlitten mit einer sich in diesen hinein erstreckenden Fixieraufnahme aufweist, in welche ein Fixierkörper des Werkzeughalters durch Bewegen desselben in einer Einsetzrichtung einsteckbar und im eingesteckten Zustand durch Fixierung desselben in der Fixieraufnahme durch ein Formschlusselement festlegbar ist.

Zweckmäßigerweise ist dabei das Formschlusselement als Fixierkeilkörper ausgebildet, der in dem Werkzeugschlitten in einer quer zur Einsetzrichtung verlaufenden Bewegungsrichtung zwischen einer Freigabestellung und einer Fixierstellung bewegbar ist, und dass der Fixierkeilkörper in der Fixierstellung mit einer Keilaufnahme des Fixierkörpers zusammenwirkt.

Im einem einfach realisierbaren Fall ist dabei vorgesehen, dass der Fixierkeilkörper in dem Werkzeugschlitten linear bewegbar geführt ist und mit einer Keilfläche auf eine Keilfläche der Keilaufnahme des Fixierkörpers wirkt.

Beispielsweise ist hierbei der Fixierkeilkörper in einem Führungskanal des Werkzeugschlittens bewegbar geführt.

Ferner ist vorzugsweise vorgesehen, dass der Fixierkeilkörper durch einen von der Maschinensteuerung gesteuerten Antrieb zwischen der Fixierstellung und der Freigabestellung bewegbar ist.

Eine andere vorteilhafte Lösung sieht vor, dass der Werkzeugträger einen Werkzeugschlitten mit einer Werkzeughalteraufnahme aufweist, in die der Werkzeughalter in einer Einsetzrichtung einsetzbar ist, welche insbesondere in einer quer zur Werkstückspindelachse verlaufenden Ebene liegt.

Eine weitere zweckmäßige Lösung sieht vor, dass der Werkzeughalter einen Hohlschaftkegel aufweist, welcher in die eine Kegelaufnahme aufweisende Werkzeughalteraufnahme einsetzbar ist.

Eine zweckmäßige Lösung zum Fixieren des Hohlschaftkegels sieht hierbei vor, dass der Hohlschaftkegel eine Spannkontur aufweist, mit welcher eine Spanneinheit der Werkzeughalteraufnahme zusammenwirkt.

Besonders zweckmäßig ist es hierbei, wenn die Spanneinheit durch eine von der Maschinensteuerung gesteuerte Spannbetätigungseinheit in Richtung ihrer Spannstellung beaufschlagbar ist, in welcher diese den Hohlschaftkegel spannend fixiert.

Zum Fixieren des Hohlschaftkegels ist es besonders günstig, wenn die Spanneinheit in der Spannstellung den Hohlschaftkegel in Richtung der Kegelachse in die Kegelaufnahme einzieht und radial zur Kegelachse an die Kegelaufnahme anpresst, um damit eine ausreichend stabile Fixierung des Hohlschaftkegels in der Kegelaufnahme zu erreichen.

Um insbesondere bei der erfindungsgemäßen Werkzeugmaschine auch angetriebene Werkzeuge einsetzen zu können, sieht eine vorteilhafte Lösung vor, dass an dem Werkzeugschlitten ein von der Maschinensteuerung gesteuerter Werkzeugantrieb stationär angeordnet ist, mit welchem eine drehbar in dem Werkzeughalter gelagerte und das Werkzeug aufnehmende Werkzeugspindel antreibbar ist.

Um dabei immer noch die Möglichkeit zu haben, den Werkzeughalter auszuwechseln ist vorzugsweise vorgesehen, dass der Werkzeugantrieb mittels einer Kupplung mit der Werkzeugspindel kuppelbar ist.

Ferner ist es von Vorteil, wenn die Kupplung derart ausgebildete Kupplungselemente aufweist, dass diese durch Einsetzen des Werkzeughalters in die Werkzeughalteraufnahme in Eingriff bringbar sind, so dass keine separate Aktion erforderlich ist, um den Werkzeugantrieb mit der Werkzeugspindel zu koppeln, sondern die Kopplung durch Einsetzen des Werkzeughalters in die Werkzeughalteraufnahme erfolgt und durch Entnehmen des Werkzeughalters ebenfalls vorteilhafterweise ein Entkuppeln der Werkzeugspindel von dem Werkzeugantrieb erfolgt.

Dies lässt sich vorteilhafterweise dadurch realisieren, dass eines der Kupplungselemente eine sich quer zur Drehachse erstreckende Aufnahme und das andere der Kupplungselemente einen sich quer zur Drehachse erstreckenden Eingriff für die Aufnahme aufweist, so dass diese durch eine lineare Bewegung in Eingriff und außer Eingriff bringbar sind.

Um sicherzustellen, dass die Drehstellung der Werkzeugspindel erhalten bleibt, wenn der Werkzeughalter aus der Werkzeughalteraufnahme entnommen wird, und zwar so lange, bis der Werkzeughalter wieder in die Werkzeughalteraufnahme eingesetzt wird, ist vorzugsweise vorgesehen, dass der Werkzeughalter mit einer Drehfixierung zum drehfesten Festlegen der drehbaren Werkzeugspindel versehen ist.

Prinzipiell wäre es möglich, die Drehfixierung über die Maschinensteuerung anzusteuern und somit gesteuert durch die Maschinensteuerung die Fixierung der Werkzeugspindel auszulösen oder aufzuheben.

Eine besonders einfache Lösung sieht jedoch vor, dass die Drehfixierung bei in der Werkzeughalteraufnahme fixiertem Werkzeughalter selbsttätig in einer inaktiven Stellung steht und beim Lösen des fixierten Werkzeughalters selbsttätig in eine aktive drehfixierende Stellung übergeht.

Ferner ist erfindungsgemäß vorgesehen, dass die Handhabungseinrichtung die Werkzeughalter gesteuert durch die Maschinensteuerung in ein Werkzeughaltermagazin einsetzt oder aus diesem entnimmt.

Damit besteht die Möglichkeit, zu entnehmende Werkzeughalter in dem Werkzeughaltermagazin in einer definierten Position abzulegen und auch einzusetzende Werkzeughalter in dem Werkzeughaltermagazin identifizierbar abzulegen und mittels des Werkzeughaltergreifers zum Einsetzen zu erfassen.

Beispielsweise ist hierzu das Werkzeughaltermagazin so ausgebildet, dass es ein durch einen Antrieb bewegbares Magazinelement zur Aufnahme der Werkzeughalter aufweist und dass der Antrieb von der Maschinensteuerung gesteuert steuerbar ist.

Des Weiteren ist vorzugsweise vorgesehen, dass das Werkzeughaltermagazin außerhalb des Arbeitsraums angeordnet ist.

Noch besser ist es, wenn das Werkzeughaltermagazin außerhalb einer Maschinenverhaubung angeordnet ist und insbesondere durch eine Verkleidung geschützt ist.

Prinzipiell könnten die Spindelachsen der Werkstückspindeln der Mehrspindelwerkzeugmaschine quer zur Spindeltrommelachse oder schräg zur Spindeltrommelachse ausgerichtet sein.

Eine besonders vorteilhafte Lösung sieht jedoch vor, dass die Spindelachsen der Werkstückspindeln parallel zur Spindeltrommelachse ausgerichtet sind.

Dadurch wird die Ausrichtung der Werkstückspindeln zu den Werkzeugträgern vereinfacht.

Ferner ist bei einer Mehrspindelwerkzeugmaschine vorzugsweise vorgesehen, dass die einzelnen Werkstückspindeln der Spindeltrommel durch von der Maschinensteuerung gesteuertes Drehen der Spindeltrommel um die Spindeltrommelachse in einzelne definierte Spindelstationen bewegbar sind, die relativ zum Maschinengestell feststehend vorgesehen sind und dass den einzelnen Spindelstationen Werkzeugträger zugeordnet sind, so dass ein Werkstück in einer in der entsprechenden Spindelstation stehenden Werkstückspindel durch den dieser Spindelstation zugeordneten mindestens einen Werkzeugträger mittels dessen Werkzeugs bearbeitet werden kann oder durch mehrere dieser Spindelstation zugeordneten Werkzeugträger mittels deren Werkzeugen bearbeitet werden kann.

Vorzugsweise sind die Werkzeugträger so ausgebildet, dass der mindestens eine Werkzeugträger ein die Werkzeughalteraufnahme tragendes von der Maschinensteuerung gesteuertes Werkzeugschlittensystem aufweist.

Vorzugsweise ist das Werkzeugschlittensystem dabei so ausgebildet, dass es mindestens einen in einer X-Bearbeitungsrichtung relativ zur Werkstückspindel bewegbaren Werkzeugschlitten aufweist, welcher die Werkzeugaufnahme trägt.

Alternativ dazu ist dieser Werkzeugschlitten mit der Werkzeugaufnahme auch in mindestens einer weiteren Achse, beispielweise in Richtung der Z-Achse, das heißt parallel zu der Werkstückspindelachse der in dieser Spindelstation stehenden Werkstückspindel bewegbar.

Besonders vorteilhaft lässt sich die erfindungsgemäße Werkzeugmaschine dann einsetzen, wenn die Handhabungseinrichtung eine Greiferaufnahme aufweist, mittels welcher die Handhabungseinrichtung einen von der Maschinensteuerung gesteuertes Werkzeughaltergreifer aufnehmen kann, so dass die Handhabungseinrichtung flexibel eingesetzt werden kann.

In diesem Fall ist, insbesondere beim Vorsehen mehrerer Werkzeughaltergreifer, vorgesehen, dass die Werkzeughaltergreifer in einem Greiferspeicher mit einer Werkstückhaltergreiferaufnahme ablegbar sind.

Um den Arbeitsraum nicht zu begrenzen ist vorzugsweise vorgesehen, dass der Greiferspeicher außerhalb des Arbeitsraums angeordnet ist.

Ferner ist vorzugsweise vorgesehen, dass der Greiferspeicher außerhalb einer Maschinenverhaubung angeordnet ist und insbesondere mit einer Verkleidung versehen ist.

Um programmgesteuert durch die Maschinensteuerung sowohl Werkstücke als auch Werkzeuge auswechseln zu können, ist vorzugsweise vorgesehen, dass die Maschinensteuerung erfasst, ob der Werkzeughaltergreifer in der Greiferaufnahme der Handhabungseinrichtung aufgenommen ist.

Dies ist beispielsweise dadurch möglich, dass die Maschinensteuerung eine Codierung am Werkzeughaltergreifer erfasst.

Eine derartige Codierung kann entweder über elektrische Kontakte oder über ein optisches Muster erkannt werden.

Eine derartige Codierung kann beispielsweise eine optische Codierung oder eine elektrische oder elektronische oder Clipcodierung sein.

Alternativ oder ergänzend dazu ist es aber ebenfalls möglich, wenn die Maschinensteuerung den Werkzeughaltergreifer aufgrund von dessen Position im Greiferspeicher identifiziert und somit über die Position im Greiferspeicher erfassen kann, ob es sich um den vorgesehenen Werkzeughaltergreifer handelt.

Im Zusammenhang mit der bisherigen Lösung wurde lediglich davon ausgegangen, dass mit der Handhabungseinrichtung ein Einsetzen und/oder Entnehmen des Werkzeughalters in einer Werkzeughalteraufnahme erfolgt.

Eine vorteilhafte Weiterbildung der erfindungsgemäßen Mehrspindelwerkzeugmaschine sieht vor, dass diese eine an dem Maschinengestell angeordnete Handhabungseinrichtung aufweist, mit welcher Werkstücke, gesteuert durch die Maschinensteuerung, in mindestens eine der Werkstückspindeln einsetzbar und/oder aus mindestens einer der Werkstückspindeln entnehmbar sind.

Besonders günstig ist es, wenn mittels der Handhabungseinrichtung Werkstücke in mehrere der Werkstückspindeln einsetzbar und/oder aus mehreren der Werkstückspindeln entnehmbar sind.

Auch diese Handhabungseinrichtung ist vorzugsweise als mehrachsige Handhabungseinrichtung ausgebildet.

Besonders günstig ist es, wenn gesteuert durch die Maschinensteuerung mittels einer Handhabungseinrichtung sowohl Werkstücke in mindestens eine der Werkstückspindel einsetzbar und/oder aus dieser entnehmbar sind und auch mittels dieser Handhabungseinrichtung mindestens ein Werkzeughalter in die mindestens eine Werkzeughalteraufnahme einsetzbar und aus dieser entnehmbar ist.

In diesem Fall ist zweckmäßigerweise vorgesehen, dass die Handhabungseinrichtung eine Greiferaufnahme aufweist, mittels welcher die Handhabungseinrichtung entweder einen Werkstückgreifer oder einen Werkzeughaltergreifer in einer Werkstückgreiferaufnahme bzw. eine Werkzeughaltergreiferaufnahme eines Greiferspeichers ablegen kann.

Vorzugsweise ist dabei dieser Greiferspeicher außerhalb des Arbeitsraums angeordnet.

Es besteht aber auch die Möglichkeit, diesen Greiferspeicher außerhalb der Maschinenverhaubung anzuordnen und insbesondere für diesen einen separaten Schutz vorzusehen.

Insbesondere ist es bei dieser Lösung günstig, wenn die Maschinensteuerung erfasst, ob der Werkstückgreifer oder der Werkzeughaltergreifer in der Greiferaufnahme der Handhabungseinrichtung aufgenommen ist.

Vorzugsweise ist dabei ebenfalls, wie im Zusammenhang mit den Werkzeughaltergreifern vorgesehen, dass die Maschinensteuerung eine Codierung am Werkstückgreifer erfasst.

Alternativ zu einer Codierung ist vorgesehen, dass die Maschinensteuerung den Werkstückgreifer aufgrund von dessen Position im Greiferspeicher erfasst.

Eine besonders vorteilhafte Lösung sieht vor, dass ein und dieselbe Handhabungseinrichtung sowohl den Werkstückgreifer als auch den Werkzeughaltergreifer in der Greiferaufnahme aufnehmen und auch steuern kann.

Insbesondere erfolgt dabei auch die Steuerung des Werkstückgreifers und des Werkzeughaltergreifers mittels der Maschinensteuerung.

Darüber hinaus betrifft die Erfindung ein Verfahren zum Betreiben einer Werkzeugmaschine gemäß einem oder mehreren der vorstehend beschriebenen Merkmale, wobei die Maschinensteuerung, insbesondere unter Verwendung eines Programms oder Programmcodes, die Handhabungseinrichtung derart steuert, dass die Handhabungseinrichtung aus einem Werkzeughaltermagazin mindestens einen Werkzeughalter entnimmt und in mindestens eine Werkzeughalteraufnahme des mindestens einen Werkzeugträgers einsetzt.

Alternativ ist vorzugsweise gemäß einer vorteilhaften Weiterbildung des erfindungsgemäßen Verfahrens vorgesehen, dass die Maschinensteuerung, insbesondere unter Verwendung eines Programms oder Programmcodes, die Handhabungseinrichtung derart steuert, dass diese einen Werkzeughalter aus einer Werkzeughalteraufnahme entnimmt und beispielsweise in einem Werkzeughaltermagazin ablegt.

Der Vorteil der erfindungsgemäßen Lösung ist daher darin zu sehen, dass mit dieser Handhabungseinrichtung mindestens ein Einsetzen und/oder Entnehmen eines Werkzeughalters in einen Werkzeugträger durchgeführt werden kann.

Um mit einem auswechselbaren Werkzeughaltergreifer arbeiten zu können, ist vorzugsweise vorgesehen, dass die Maschinensteuerung, insbesondere unter Verwendung eines Programms oder Programmcodes, die Handhabungseinrichtung derart steuert, dass diese mit ihrer Greiferaufnahme einen Werkzeughaltergreifer aufnimmt.

Diese Lösung hat den Vorteil, dass damit in einfacher Weise gegebenenfalls mehrere Werkzeughaltergreifer eingesetzt werden können.

Um zu erkennen, dass ein Werkzeughaltergreifer aufgenommen ist, insbesondere auch ob der Werkzeughaltergreifer zuverlässig aufgenommen ist, ist vorzugsweise vorgesehen, dass die Maschinensteuerung, insbesondere unter Verwendung eines Programms oder Programmcodes, erfasst, ob in der Greiferaufnahme ein Werkzeughaltergreifer aufgenommen ist.

Insbesondere bei Verwendung zweier Werkzeughaltergreifer ist es zweckmäßig, wenn die Maschinensteuerung, insbesondere unter Verwendung eines Programms oder Programmcodes, die Handhabungseinrichtung derart steuert, dass diese zum Wechsel zwischen einem ersten Werkzeughaltergreifer und einem zweiten Werkzeughaltergreifer einen derselben in einem Greiferspeicher ablegt und den anderen derselben aus dem Greiferspeicher entnimmt.

Um den Werkzeughaltergreifer als solchen erfassen zu können ist vorzugsweise vorgesehen, dass die Maschinensteuerung, insbesondere unter Verwendung eines Programms oder Programmcodes mittels der Handhabungseinrichtung eine Codierung am Werkzeughaltergreifer erfasst.

Damit ist einerseits der Werkzeughaltergreifer als solcher identifizierbar und andererseits auch identifizierbar, ob der Werkzeughaltergreifer sicher an der Handhabungseinrichtung gehalten ist.

Darüber hinaus ist zweckmäßigerweise vorgesehen, dass die Maschinensteuerung, insbesondere unter Verwendung eines Programms oder Programmcodes aufgrund der Position des jeweiligen Haltergreifers in dem Greiferspeicher diesen identifiziert.

Darüber hinaus ist vorzugsweise vorgesehen, dass die Maschinensteuerung, insbesondere unter Verwendung eines Programms oder Programmcodes, die Handhabungseinrichtung derart steuert, dass diese mindestens einen Werkzeughalter in ein Werkzeughaltermagazin einsetzt oder aus diesem entnimmt.

Dies schließt insbesondere auch ein, dass die Maschinensteuerung in der Lage ist, beispielsweise über die Handhabungseinrichtung, die einzelnen Werkzeughalter im Werkzeughaltermagazin zu identifizieren oder abzuspeichern, in welcher Position des Werkzeughaltermagazins welcher Werkzeughalter abgespeichert ist und darüber den jeweiligen Werkzeughalter zu identifizieren.

Hierzu ist insbesondere vorgesehen, dass die Maschinensteuerung, insbesondere unter Verwendung eines Programms oder Programmcodes, mittels eines Antriebs ein Magazinelement des Werkzeughaltermagazins so bewegt, dass mittels der Handhabungseinrichtung ein Zugriff auf einen definierten Werkzeughalter in dem Magazinelement möglich ist.

Mit dieser Lösung besteht die Möglichkeit, einerseits eine Vielzahl von Werkzeughaltern in dem Werkzeughaltermagazin zu speichern und darüber hinaus dann wiederum den Werkzeughalter zu erkennen, der aus dem Werkzeughaltermagazin entnommen werden soll, um diesen in eine für diesen vorgesehene Werkzeughalteraufnahme eines Werkzeugträgers der Werkzeugmaschine einzusetzen.

Darüber hinaus ist, um möglichst kollisionsfrei die Werkzeughalter auswechseln zu können, vorgesehen, dass die Maschinensteuerung, insbesondere unter Verwendung eines Programms oder Programmcodes ein Werkzeugschlittensystem des Werkzeugträgers derart bewegt, dass dessen Werkzeughalteraufnahme in einer Wechselposition zum Auswechseln des Werkzeughalters steht.

Eine derartige Wechselposition der Werkzeughalteraufnahme ist beispielsweise eine Position in welcher das Werkzeug des in dieses eingesetzten Werkzeughalters nicht zum Einsatz am Werkstück kommen soll.

Diese Lösung hat den Vorteil, dass damit in einfacher Weise die Wechselposition so festgelegt werden kann, dass Kollisionen beim Auswechseln eines Werkzeughalters aus der Werkzeughalteraufnahme vermieden werden können.

Beispielsweise ist es mit dieser Lösung möglich, die Wechselposition so zu wählen, dass Kollisionen des Werkzeughalters mit einem in einer Werkstückspindel noch aufgenommenen Werkstück oder mit Werkzeugen anderer, insbesondere benachbarter, Werkzeughalter vermieden werden können.

Im einfachsten Fall führt dies dazu, dass die Wechselposition der Werkzeughalteraufnahme in möglichst großem Abstand von der nächstliegenden Werkstückspindel gewählt wird.

Zweckmäßigerweise ist hierzu vorgesehen, dass die Maschinensteuerung, insbesondere unter Verwendung eines Programms oder Programmcodes, die Handhabungseinrichtung derart steuert, dass diese einen Werkzeughalter in die in der Wechselposition stehende Werkzeughalteraufnahme einsetzt oder aus dieser entnimmt und somit Kollisionen beim Auswechseln des Werkzeughalters mit großer Wahrscheinlichkeit vermieden werden können.

Eine weitere zweckmäßige Lösung sieht vor, dass die Maschinensteuerung, insbesondere unter Verwendung eines Programms oder Programmcodes, die Handhabungseinrichtung derart steuert, dass diese den Werkzeughalter in die Werkzeughalteraufnahme in einer ungefähr parallel zu einer Werkstückspindelachse der jeweiligen Werkstückspindel verlaufenden Einsetzrichtung einsetzt oder entgegengesetzt zu dieser Einsetzrichtung aus dieser Werkzeughalteraufnahme entnimmt.

Bei einer derartigen Einsetzrichtung der Werkzeughalteraufnahme besteht der große Vorteil, dass damit mit großer Wahrscheinlichkeit ein mit benachbarten Werkzeughaltern und Werkstücken kollisionsfreies Auswechseln des Werkzeughalters möglich ist und dass auch ein Spänefall zu keinen Beeinträchtigungen führt.

Alternativ dazu besteht aber auch die Möglichkeit, dass die Maschinensteuerung, insbesondere unter Verwendung eines Programms oder Programmcodes, die Handhabungseinrichtung derart steuert, dass diese den Werkzeughalter in die Werkzeughalteraufnahme in einer Richtung quer zu einer Werkstückspindelachse der jeweiligen Werkstückspindel verlaufenden Einsetzrichtung einsetzt oder entgegengesetzt zu dieser entnimmt.

Diese Lösung hat den Nachteil, dass damit gegebenenfalls ein größerer Abstand zwischen der Wechselposition und einem Werkstück in der nächstliegenden Werkstückspindel einzuhalten ist, andererseits aber bei einem komplexen Aufbau den Vorteil, dass im Arbeitsraum ein parallel zur Spindelachse verlaufender Zugang zu der Wechselposition nicht erforderlich ist.

Eine weitere vorteilhafte Lösung sieht vor, dass die Maschinensteuerung, insbesondere unter Verwendung eines Programms oder Programmcodes, eine Fixiervorrichtung der Werkzeughalteraufnahme derart ansteuert, dass diese einen in die Werkzeughalteraufnahme eingesetzten Werkzeughalter fixiert oder einen aus der Werkzeughalteraufnahme zu entnehmenden Werkzeughalter freigibt.

Damit lässt sich mit der Maschinensteuerung auch das Fixieren des Werkzeughalters in der Werkzeughalteraufnahme nach dem Einsetzen desselben und das Aufrechterhalten der Fixierung bis zum Auswechseln desselben steuern und andererseits zum Auswechseln in einfacher Weise die Fixierung aufheben.

Darüber hinaus ist vorzugsweise vorgesehen, dass die Maschinensteuerung, insbesondere unter Verwendung eines Programms oder Programmcodes, einen Werkzeugantrieb für eine drehbar in dem Werkzeughalter gelagerte Werkzeugspindel derart ansteuert, dass dieser vor dem Einsetzen oder nach dem Entnehmen des Werkzeughalters aus der Werkzeughalteraufnahme in einer definierten Drehstellung steht und insbesondere stehen bleibt, um ein Abkuppeln und ein erneutes Ankuppeln einer ebenfalls in einer definierten Drehstellung stehenden Werkzeugspindel des Werkzeughalters beim Auswechseln desselben zu erlauben.

Das heißt, dass der Werkzeugantrieb insbesondere so angesteuert wird, dass ein diesen mit der Werkzeugspindel verbindendes Kupplungselement in der Stellung stehen bleibt, in welcher ein Abkuppeln der Werkzeugspindel des Werkzeughalters allein durch Entnehmen des Werkzeughalters erfolgt und auch in dieser Drehstellung des Kupplungselements des Werkzeugantriebs wiederum ein Einkuppeln mit dem Kupplungselement der Werkzeugspindel allein durch Einsetzen des Werkzeughalters erfolgen kann.

Insbesondere ist in diesem Fall vorgesehen, dass der Werkzeughalter eine Drehfixierung aufweist, welche dafür sorgt, dass die Werkzeugspindel ebenfalls in der Stellung stehen bleibt, in welcher ein Entnehmen des Werkzeughalters aus der Werkzeughalteraufnahme erfolgt und diese Drehstellung so lange aufrechterhalten wird, bis wieder ein Ankuppeln der Werkzeugspindel an den Werkzeugantrieb beim Einsetzen des Werkzeughalters erfolgt.

Eine weitere vorteilhafte Ausführung des erfindungsgemäßen Verfahrens sieht vor, dass die Maschinensteuerung, insbesondere unter Verwendung eines Programms oder Programmcodes, die Handhabungseinrichtung derart steuert, dass diese den Werkzeughaltergreifer beim Wechseln eines Werkzeughalters, insbesondere mitsamt diesem Werkzeughalter, durch den Arbeitsraum bis zu der, insbesondere in Wechselposition stehenden, Werkzeughalteraufnahme längs eines abgespeicherten Werkzeugwechselpfades bewegt.

Auch dieser abgespeicherte Werkzeugwechselpfad ist so zu wählen, dass der Werkzeughaltergreifer mitsamt dem Werkzeughalter kollisionsfrei durch sämtliche Komponenten des Arbeitsraums und auch kollisionsfrei mit anderen Werkzeugen oder Werkzeughaltern oder Werkzeugträgern oder Werkstückspindeln mit oder ohne Werkstücken in die vorgesehene Werkzeughalteraufnahme bewegt und in dieser fixiert werden kann.

Auch ein derartiger Werkzeugwechselpfad kann grundsätzlich vorab frei programmiert vorgegeben und abgespeichert werden.

Eine andere vorteilhafte Lösung sieht vor, dass die Maschinensteuerung, insbesondere unter Verwendung eines Programms oder Programmcodes, eine manuell gesteuerte oder manuell vorgegebene Bewegung der Handhabungseinrichtung mit dem Werkzeughaltergreifer erfasst und abspeichert und den Werkzeughaltergreifer durch Ansteuern der Handhabungseinrichtung entsprechend dieses abgespeicherten Werkzeugwechselpfades zu dieser Werkzeughalteraufnahme bewegt.

Auch in diesem Fall ist für jede der Werkzeughalteraufnahmen, in welche ein Werkzeug eingewechselt werden soll, ein derartiger Werkzeugwechselpfad festzulegen und abzuspeichern, so dass dieser dann für die Maschinensteuerung zur Verfügung steht.

Im Zusammenhang mit den bisherigen Ausführungen zu dem erfindungsgemäßen Verfahren wurde lediglich der Werkzeugwechsel erläutert.

Eine weitere vorteilhafte Lösung sieht vor, dass die Maschinensteuerung insbesondere unter Verwendung eines Programms oder Programmcodes, eine oder die Handhabungseinrichtung derart steuert, dass die Handhabungseinrichtung Werkstücke zumindest aus einer Werkstückspindel entnimmt und einer Werkstückzu- und/oder -abfuhreinrichtung übergibt.

Darüber hinaus ist vorteilhafterweise vorgesehen, dass die Maschinensteuerung, insbesondere unter Verwendung eines Programms oder Programmcodes, eine Werkstückspanneinrichtung der Werkstückaufnahme der jeweiligen Werkstückspindel zum Entnehmen eines Werkstücks deaktiviert oder nach dem Einsetzen eines Werkstücks zum Spannen des Werkstücks aktiviert, das heißt, dass seitens der Maschinensteuerung ebenfalls zu geeigneter Zeit das Spannen eines Werkstücks aktiviert oder deaktiviert werden kann, um das Werkstück nach dem Einsetzen zu fixieren oder zum Auswechseln entnehmen zu können.

Eine weitere vorteilhafte Lösung sieht vor, dass die Maschinensteuerung, insbesondere unter Verwendung eines Programms oder Programmcodes, die Handhabungseinrichtung derart steuert, dass diese den Werkstückgreifer längs eines definiert vorgegebenen Werkstückwechselpfades durch den Arbeitsraum zu der Werkstückspindel bewegt.

Damit ist insbesondere der Werkstückwechselpfad derart definiert, dass dieser so gestaltet sein soll und so durch den Arbeitsraum zu der jeweiligen Werkstückspindel so verlaufen soll, dass weder das vom Werkstückgreifer gegriffene Werkzeug noch der Werkstückgreifer noch die Handhabungsvorrichtung mit irgendeiner Komponente im Arbeitsraum oder einem Werkzeug oder Werkzeugträger kollidiert.

Ein derartiger Werkstückwechselpfad kann als solcher vorab als ein Programm oder Programmcode, je nach Bestückung der Werkzeugmaschine und insbesondere auch unter Berücksichtigung sämtlicher zum Zeitpunkt des Werkzeugwechsels vorhandener Werkzeuge und Werkzeughalter oder auch weiterer Werkstücke, vorgegeben werden.

Eine andere vorteilhafte Lösung sieht vor, dass die Maschinensteuerung, insbesondere unter Verwendung eines Programms oder Programmcodes, eine manuell gesteuerte oder manuell vorgegebene Bewegung der Handhabungseinrichtung mit dem Werkstückgreifer durch den Arbeitsraum und zu der Werkstückspindel als Werkstückwechselpfad erfasst, abspeichert und nachfolgend als abgespeicherten Werkstückwechselpfad mindestens für das Entnehmen eines Werkstücks aus dieser jeweiligen Werkstückspindel einsetzt.

Das heißt jedoch, dass zum Betrieb der Werkzeugmaschine für die jeweilige Werkstückspindel in der zum Auswechseln vorgesehenen Spindelstation der Spindelposition ein derartiger Werkstückwechselpfad vorgegeben und abgespeichert sein muss.

Die Handhabungseinrichtung für den Werkstückwechsel könnte grundsätzlich eine sich von der Handhabungseinrichtung für den Werkzeugwechsel separate Handhabungseinrichtung sein.

Besonders zweckmäßig ist es jedoch, wenn dieselbe Handhabungseinrichtung sowohl für den Werkzeugwechsel als auch für den Werkstückwechsel eingesetzt wird.

Eine besonders vorteilhafte Lösung auch zum Auswechseln des Werkstücks sieht vor, dass die Maschinensteuerung, insbesondere unter Verwendung eines Programms oder Programmcodes, die Handhabungseinrichtung derart steuert, dass diese mit ihrer Greiferaufnahme einen Wechsel zwischen einem Werkstückgreifer und einem Werkzeughaltergreifer oder zwischen zwei Werkstückgreifern oder zwischen zwei Werkzeughaltergreifern durchführt.

Damit ist in einfacher Weise sichergestellt, dass die Handhabungseinrichtung mit einem für Werkstücke geeigneten Werkstückgreifer und einem für den Werkzeughalter geeigneten Werkzeughaltergreifer vorteilhaft arbeiten und sowohl das Werkstück als auch den Werkzeughalter zuverlässig greifen kann.

Eine weitere vorteilhafte Lösung sieht vor, dass die Maschinensteuerung, insbesondere unter Verwendung eines Programms oder Programmcodes, erfasst, ob in der Greiferaufnahme ein Werkstückgreifer, gegebenenfalls welcher Werkstückgreifer, oder ein Werkzeughaltergreifer, gegebenenfalls welcher Werkzeughaltergreifer, aufgenommen ist.

Damit ist der große Vorteil erreicht, dass die Maschinensteuerung in der Lage ist, zu erkennen, ob ein Werkstückgreifer oder ein Werkzeughaltergreifer in der Greiferaufnahme vorhanden ist und eingesetzt werden kann.

Besonders zweckmäßig ist es hierbei, wenn die Maschinensteuerung, insbesondere unter Verwendung eines Programms oder Programmcodes, die Handhabungseinrichtung derart steuert, dass diese zum Wechseln zwischen dem Werkstückgreifer und dem Werkzeughaltergreifer oder zwischen zwei Werkstückgreifern oder zwischen zwei Werkzeughaltergreifern einen derselben in einem Greiferspeicher ablegt und den anderen derselben aus dem Greiferspeicher entnimmt.

Damit lässt sich in einfacher Weise zuverlässig und reproduzierbar ein Wechsel zwischen einem Werkstückgreifer und einem Werkzeughaltergreifer realisieren.

Um zu erkennen, ob in der Handhabungseinrichtung ein Werkstückgreifer oder ein Werkzeughaltergreifer aufgenommen ist, ist vorzugsweise vorgesehen, dass die Maschinensteuerung, insbesondere unter Verwendung eines Programms oder Programmcodes, mittels der Handhabungseinrichtung eine Codierung am Werkstückgreifer und am Werkzeuggreifer erfasst.

Alternativ oder ergänzend hierzu ist bei einer weiteren vorteilhaften Lösung vorgesehen, dass die Maschinensteuerung, insbesondere unter Verwendung eines Programms oder Programmcodes, aufgrund der Position des Werkstückgreifers und des Werkzeughaltergreifers in dem Greiferspeicher diese identifiziert.

Das heißt, dass die Handhabungseinrichtung den Werkstückgreifer und den Werkzeughaltergreifer in unterschiedlichen Positionen, insbesondere in für diese vorgesehenen Greiferaufnahmen, ablegt und somit bereits aus der Position, aus der der jeweilige Greifer entnommen wird, erkennen kann, welcher der Greifer von der Greiferaufnahme der Handhabungseinrichtung aufgenommen ist.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Mehrspindel-Werkzeugmaschine, umfassend ein Maschinengestell (10), eine am Maschinengestell (10) um eine Spindeltrommelachse (20) drehbar angeordnete Spindeltrommel (16) mit mehreren Werkstückspindeln (22), die mit jeweils einer Werkstückaufnahme (42) für ein in einem Arbeitsraum (50) zu bearbeitendes Werkstücks (W) versehen sind, mehrere in dem Arbeitsraum (50) angeordnete, insbesondere einzelnen Spindelstationen zugeordnete Werkzeugträger (28) mit jeweils einer Werkzeughalteraufnahme (92), in welche ein Werkzeughalter (90) einsetzbar ist, sowie eine Maschinensteuerung (80) zur Steuerung der Werkzeugmaschine, wobei an dem Maschinengestell (10) eine Handhabungseinrichtung (60) angeordnet ist, wobei mit der Handhabungseinrichtung (60), ebenfalls gesteuert durch die Maschinensteuerung (80), mindestens ein Werkzeughalter (90) in mindestens eine der Werkzeughalteraufnahmen (92) einsetzbar und/oder aus dieser entnehmbar ist.
2. Werkzeugmaschine nach Ausführungsform 1, wobei die Handhabungseinrichtung (60) als eine mehrachsige Handhabungseinrichtung (60) ausgebildet ist.
3. Werkzeugmaschine nach einer der voranstehenden Ausführungsformen, wobei die Handhabungseinrichtung (60) so ausgebildet ist, dass sie auf mehrere Werkzeughalteraufnahmen (92) zum Einsetzen und/oder Entnehmen eines Werkzeughalters (90) zugreifen kann.
4. Werkzeugmaschine nach einer der voranstehenden Ausführungsformen, wobei die Handhabungseinrichtung (60) so ausgebildet ist, dass sie auf mehreren Spindelstationen zugeordnete Werkzeughalteraufnahmen (92) zum Einsetzen und/oder Entnehmen eines Werkzeughalters (90) zugreifen kann.
5. Werkzeugmaschine nach einer der voranstehenden Ausführungsformen, wobei die Handhabungseinrichtung (60) mit einer Bewegungskomponente parallel zu den Werkstückspindelachsen beim Einsetzen und/oder Entnehmen des jeweiligen Werkzeughalters in dem Arbeitsraum (50) verfährt.
6. Werkzeugmaschine nach einer der voranstehenden Ausführungsformen, wobei die Handhabungseinrichtung (60) von einer der Spindeltrommel (16) abgewandten Seite des Arbeitsraums (50) in den Arbeitsraum (50) zum Einsetzen und/oder Entnehmen des jeweiligen Werkzeughalters (90) einfährt.
7. Werkzeugmaschine nach einer der voranstehenden Ausführungsformen, wobei der Werkzeughalter (90) in die jeweilige Werkzeughalteraufnahme (92) in einer ungefähr parallel zu der Spindeltrommelachse (20) verlaufenden Einsetzrichtung (178) einsetzbar ist.
8. Werkzeugmaschine nach einer der voranstehenden Ausführungsformen, wobei der Werkzeughalter (90) in die Werkzeughalteraufnahme (92) in Richtung quer zu der Spindeltrommelachse (20) verlaufenden Einsetzrichtung (288) einsetzbar ist, die insbesondere von der Spindeltrommelachse (20) weg verläuft.
9. Werkzeugmaschine nach einer der voranstehenden Ausführungsformen, wobei mit der Maschinensteuerung (80) eine Fixiervorrichtung (180) zur Fixierung des Werkzeughalters (90) in der Werkzeughalteraufnahme (92) steuerbar ist.
10. Werkzeugmaschine nach einer der voranstehenden Ausführungsformen, wobei zur Bildung der Fixiervorrichtung (180) die Werkzeughalteraufnahme (92) und der Werkzeughalter (90) zusammenwirkende Formschlusselemente (176, 182, 184, 292, 300) aufweisen, welche bei einem Einsetzen des Werkzeughalters (92) in die Werkzeughalteraufnahme (92) formschlüssig in Eingriff bringbar sind.
11. Werkzeugmaschine nach Ausführungsform 10, wobei der Werkzeugträger (28) einen Werkzeugschlitten (156) mit einer sich in diesen hinein erstreckenden Fixieraufnahme (174) aufweist, in welche ein Fixierkörper (176) des Werkzeughalters (160) durch Bewegen desselben in einer Einsetzrichtung (178) einsteckbar und in einem eingesetzten Zustand durch Fixierung desselben in der Fixieraufnahme (174) durch ein Formschlusselement (182) festlegbar ist.
12. Werkzeugmaschine nach Ausführungsform 11, wobei das Formschlusselement ein Fixierkeilkörper (182) ist, der in dem Werkzeugschlitten (156) in einer quer zur Einsetzrichtung (178) verlaufenden Bewegungsrichtung zwischen einer Freigabestellung und einer Fixierstellung bewegbar ist, und der Fixierkeilkörper (182) in der Fixierstellung mit einer Keilaufnahme (184) des Fixierkörpers (176) zusammenwirkt.
13. Werkzeugmaschine nach Ausführungsform 12, wobei der Fixierkeilkörper (182) in dem Werkzeugschlitten (156) linear bewegbar geführt ist und mit einer Keilfläche (186) auf eine Keilfläche (188) der Keilaufnahme (184) des Fixierkörpers (176) wirkt.
14. Werkzeugmaschine nach Ausführungsform 13, wobei der Fixierkeilkörper (182) durch einen von der Maschinensteuerung (80) gesteuerten Antrieb (200) zwischen der Fixierstellung und der Freigabestellung bewegbar ist.
15. Werkzeugmaschine nach einer der Ausführungsformen 1 bis 11, wobei der Werkzeugträger (28) einen Werkzeugschlitten (156) mit einer Werkzeughalteraufnahme (250) aufweist, in die der Werkzeughalter (260, 370) in einer Einsetzrichtung (288) einsetzbar ist, welche in einer quer zur Werkstückspindelachse (24) verlaufenden Ebene liegt.
16. Werkzeugmaschine nach Ausführungsform 15, wobei der Werkzeughalter (260, 370) einen Hohlschaftkegel (274) aufweist, welcher in die eine Kegelaufnahme (274) aufweisende Werkzeughalteraufnahme (250) einsetzbar ist.
17. Werkzeugmaschine nach Ausführungsform 16, wobei der Hohlschaftkegel (274) eine Spannkontur (292) aufweist, mit welcher eine Spanneinheit (300) der Werkzeughalteraufnahme (250) zusammenwirkt.
18. Werkzeugmaschine nach Ausführungsform 17, wobei die Spanneinheit (300) durch eine von der Maschinensteuerung (80) gesteuerte Spannbetätigungseinheit (320) in Richtung ihrer Spannstellung beaufschlagbar ist, in welcher diese den Hohlschaftkegel (274) spannend fixiert.
19. Werkzeugmaschine nach einer der Ausführungsformen 16 bis 18, wobei die Spanneinheit (300) in der Spannstellung den Hohlschaftkegel (274) in Richtung der Kegelachse (286) in die Kegelaufnahme (282) einzieht und radial zur Kegelachse (286) an die Kegelaufnahme (282) anpresst.
20. Werkzeugmaschine nach einer der voranstehenden Ausführungsformen, wobei an dem Werkzeugschlitten (30) ein von der Maschinensteuerung (80) gesteuerter Werkzeugantrieb (220, 350) stationär angeordnet ist, mit welchem eine drehbar in dem Werkzeughalter (90) gelagerte Werkzeugspindel (218, 266) antreibbar ist.
21. Werkzeugmaschine nach Ausführungsform 20, wobei der Werkzeugantrieb (230, 350) mittels einer Kupplung (224, 340) mit der Werkzeugspindel (218, 266) kuppelbar ist.
22. Werkzeugmaschine nach Ausführungsform 21, wobei die Kupplung (224, 340) derart ausgebildete Kupplungselemente aufweist, dass diese beim Einsetzen des Werkzeughalters (90) in die Werkzeughalteraufnahme (92) in Eingriff bringbar sind.
23. Werkzeugmaschine nach Ausführungsform 22, wobei eines der Kupplungselemente (226, 338) eine sich quer zur Drehachse erstreckende Aufnahme und das andere der Kupplungselemente (228, 336) einen sich quer zur Drehachse erstreckenden Eingriff für die Aufnahme aufweist.
24. Werkzeugmaschine nach einer der Ausführungsformen 20 bis 23, wobei der Werkzeughalter (90) mit einer Drehfixierung (234, 362) zum drehfesten Festlegen der drehbaren Werkzeugspindel (216, 266) versehen ist.
25. Werkzeugmaschine nach Ausführungsform 24, wobei die Drehfixierung (234, 362) bei in der Werkzeughalteraufnahme (92) fixiertem Werkzeughalter (90) selbsttätig in einer inaktiven Stellung steht und beim Lösen des fixierten Werkzeughalters selbsttätig in eine aktive drehfixierende Stellung übergeht.
26. Werkzeugmaschine nach einer der voranstehenden Ausführungsformen, wobei mit der Handhabungseinrichtung (60) die Werkzeughalter (90) gesteuert durch die Maschinensteuerung (80) in ein Werkzeughaltermagazin (96) einsetzbar oder aus diesem entnehmbar sind.
27. Werkzeugmaschine nach Ausführungsform 26, wobei das Werkzeughaltermagazin (96) ein durch einen Antrieb (97) bewegbares Magazinelement (95) zur Aufnahme der Werkzeughalter (90) aufweist, und der Antrieb (97) von der Maschinensteuerung steuerbar ist.
28. Werkzeugmaschine nach Ausführungsform 26 oder 27, wobei das Werkzeughaltermagazin (96) außerhalb des Arbeitsraums (50) angeordnet ist.
29. Werkzeugmaschine nach einer der voranstehenden Ausführungsformen, wobei die Spindelachsen (24) der Werkstückspindeln (22) parallel zu der Spindeltrommelachse (20) ausgerichtet sind.
30. Werkzeugmaschine nach einer der voranstehenden Ausführungsformen, wobei die Werkzeugträger (28) Spindelstationen (26) zugeordnet sind, in denen die Werkstückspindeln (22) zur Bearbeitung der in den Werkstückaufnahmen (42) gehaltenen Werkstücke (W) positionierbar sind.
31. Werkzeugmaschine nach einem der voranstehenden Ausführungsformen, wobei der mindestens eine Werkzeugträger (28) ein die Werkzeughalteraufnahme (92) tragendes von der Maschinensteuerung (80) gesteuertes Werkzeugschlittensystem (30) aufweist.
32. Werkzeugmaschine nach Ausführungsform 31, wobei das Werkzeugschlittensystem (30) mindestens in einer X-Bearbeitungsrichtung relativ der Werkstückspindel (22) bewegbaren Werkzeugschlitten aufweist.
33. Werkzeugmaschine nach einer der voranstehenden Ausführungsformen, wobei die Handhabungseinrichtung (60) eine Greiferaufnahme (66) aufweist, mittels welcher die Handhabungseinrichtung (60) einen von der Maschinensteuerung (80) gesteuerten Werkzeughaltergreifer (98) aufnehmen kann.
34. Werkzeugmaschine nach Ausführungsform 33, wobei der Werkzeughaltergreifer (98) in einer Werkzeughaltergreiferaufnahme (154) eines Greiferspeichers (100) ablegbar ist.
35. Werkzeugmaschine nach Ausführungsform 34, wobei der Greiferspeicher (100) außerhalb des Arbeitsraums (50) angeordnet ist.
36. Werkzeugmaschine nach einer der Ausführungsformen 33 bis 35, wobei die Maschinensteuerung (80) erfasst, ob der Werkzeughaltergreifer (98) in der Greiferaufnahme (66) der Handhabungseinrichtung (60) aufgenommen ist.
37. Werkzeugmaschine nach Ausführungsform 36, wobei die Maschinensteuerung (80) eine Codierung am Werkzeughaltergreifer (98) erfasst.
38. Werkzeugmaschine nach einer der Ausführungsformen 34 bis 37, wobei die Maschinensteuerung (80) den Werkzeughaltergreifer (98) aufgrund von dessen Position im Greiferspeicher (100) erfasst.
39. Werkzeugmaschine nach einer der voranstehenden Ausführungsformen, wobei diese eine an dem Maschinengestell (10) vorgesehene Handhabungseinrichtung (60) aufweist, mit welcher Werkstücke (W), gesteuert durch die Maschinensteuerung (80), in mindestens ein der Werkstückspindeln (22) einsetzbar und/oder aus dieser entnehmbar sind.
40. Werkzeugmaschine nach Ausführungsform 39, wobei die Maschinensteuerung (80) die Handhabungseinrichtung (60) bei einem Werkstückwechsel steuert.
41. Werkzeugmaschine nach Ausführungsform 39 oder 40, wobei die Handhabungseinrichtung (60) eine Greiferaufnahme (66) aufweist, mittels welcher die Handhabungseinrichtung (60) einen Werkstückgreifer (68) aufnehmen kann.
42. Werkzeugmaschine nach Ausführungsform 41, wobei der Werkstückgreifer (68) in einer Werkstückgreiferaufnahme (152) eines Greiferspeichers (100) ablegbar ist.
43. Werkzeugmaschine nach Ausführungsform 42, wobei der Greiferspeicher (100) außerhalb des Arbeitsraums (50) angeordnet ist.
44. Werkzeugmaschine nach einer der Ausführungsformen 41 bis 43, wobei die Maschinensteuerung (80) erfasst, ob der Werkstückgreifer (68) in der Greiferaufnahme (66) der Handhabungseinrichtung (60) aufgenommen ist.
45. Werkzeugmaschine nach Ausführungsform 44, wobei die Maschinensteuerung (80) eine Codierung am Werkstückgreifer (68) erfasst.
46. Werkzeugmaschine nach einer der voranstehenden Ausführungsformen, wobei die Maschinensteuerung (80) den Werkstückgreifer (68) aufgrund von dessen Position im Greiferspeicher (100) erfasst.
47. Verfahren zum Betreiben einer Werkzeugmaschine gemäß einer der voranstehenden Ausführungsformen, wobei die Maschinensteuerung (80), insbesondere unter Verwendung eines Programms oder Programmcodes, die Handhabungseinrichtung (60) derart steuert, dass die Handhabungseinrichtung (60) aus einem Werkzeughaltermagazin (96) mindestens einen Werkzeughalter (90) entnimmt und in mindestens eine Werkzeughalteraufnahme (92) des mindestens einen Werkzeugträgers (28) einsetzt und/oder einen Werkzeughalter (90) aus der Werkzeughalteraufnahme (92) entnimmt und in dem Werkzeughaltermagazin ablegt.
48. Verfahren nach Ausführungsform 47, wobei die Maschinensteuerung (80), insbesondere unter Verwendung eines Programms oder Programmcodes, die Handhabungseinrichtung (60) derart steuert, dass diese mit ihrer Greiferaufnahme (66) einen Werkzeughaltergreifer (98) aufnimmt.
49. Verfahren nach Ausführungsform 47 oder 48, wobei die Maschinensteuerung (80), insbesondere unter Verwendung eines Programms oder Programmcodes, erfasst, ob in der Greiferaufnahme (66) ein Werkzeughaltergreifer (98) aufgenommen ist.
50. Verfahren nach Ausführungsform 49, wobei die Maschinensteuerung (80), insbesondere unter Verwendung eines Programms oder Programmcodes, die Handhabungseinrichtung (60) derart steuert, dass diese zum Wechseln zwischen einem ersten Werkzeughaltergreifer und einem zweiten Werkzeughaltergreifer (98) einen derselben in einem Greiferspeicher (100) ablegt und den anderen derselben aus dem Greiferspeicher (100) entnimmt.
51. Verfahren nach einer der Ausführungsformen 47 bis 50, wobei die Maschinensteuerung (80), insbesondere unter Verwendung eines Programms oder Programmcodes, mittels der Handhabungseinrichtung (60) eine Codierung am Werkzeughaltergreifer (98) erfasst.
52. Verfahren nach einer der Ausführungsformen 47 bis 51, wobei die Maschinensteuerung (80), insbesondere unter Verwendung eines Programms oder Programmcodes, aufgrund der Position des jeweiligen Werkzeughaltergreifers (98) in dem Greiferspeicher (100) diesen identifiziert.
53. Verfahren zum Betreiben einer Werkzeugmaschine nach einer der voranstehenden Ausführungsformen oder nach einer der Ausführungsformen 47 bis 52, wobei die Maschinensteuerung (80), insbesondere unter Verwendung eines Programms oder Programmcodes, die Handhabungseinrichtung (60) derart steuert, dass diese mindestens einen Werkzeughalter (90) in ein Werkzeughaltermagazin (96) einsetzt oder aus diesem entnimmt.
54. Verfahren nach Ausführungsform 53, wobei die Maschinensteuerung (80), insbesondere unter Verwendung eines Programms oder Programmcodes, mittels eines Antriebs (97) ein Magazinelement (95) des Werkzeughaltermagazins (96) so bewegt, dass mittels der Handhabungseinrichtung (60) ein Zugriff auf einen definierten Werkzeughalter (90) in dem Magazinelement (95) möglich ist.
55. Verfahren nach einer der Ausführungsformen 47 bis 54, wobei die Maschinensteuerung (80), insbesondere unter Verwendung eines Programms oder Programmcodes, ein Werkzeugschlittensystem (30) des Werkzeugträgers (28) derart bewegt, dass dessen Werkzeughalteraufnahme (92) in einer Wechselposition zum Auswechseln des Werkzeughalters (90) steht.
56. Verfahren nach Ausführungsform 55, wobei die Maschinensteuerung (80), insbesondere unter Verwendung eines Programms oder Programmcodes, die Handhabungseinrichtung (60) derart steuert, dass diese einen Werkzeughalter (90) in die in der Wechselposition stehende Werkzeughalteraufnahme (92) einsetzt oder aus dieser entnimmt.
57. Verfahren nach einer der Ausführungsformen 47 bis 56, wobei die Maschinensteuerung (80), insbesondere unter Verwendung eines Programms oder Programmcodes, die Handhabungseinrichtung (60) derart steuert, dass diese den Werkzeughalter (90) in die Werkzeughalteraufnahme (92) in einer ungefähr parallel zu einer Werkstückspindelachse (24) der jeweiligen Werkstückspindel (22) verlaufenden Einsetzrichtung (178) einsetzt oder entgegengesetzt zu dieser Einsetzrichtung aus dieser entnimmt.
58. Verfahren nach einer der Ausführungsformen 47 bis 57, wobei die Maschinensteuerung (80), insbesondere unter Verwendung eines Programms oder Programmcodes, die Handhabungseinrichtung (60) derart steuert, dass diese den Werkzeughalter (90) in die Werkzeughalteraufnahme (92) in einer Richtung quer zu einer Werkstückspindelachse (24) der jeweiligen Werkstückspindel (22) verlaufenden Einsetzrichtung (288) einsetzt oder entgegengesetzt zu dieser entnimmt.
59. Verfahren zum Betreiben einer Werkzeugmaschine nach einer der voranstehenden Ausführungsformen oder nach einer der Ausführungsformen 47 bis 58, wobei die Maschinensteuerung (80), insbesondere unter Verwendung eines Programms oder Programmcodes, eine Fixiervorrichtung (180) der Werkzeughalteraufnahme (92) derart ansteuert, dass diese einen in die Werkzeughalteraufnahme (92) eingesetzten Werkzeughalter (90) fixiert oder einen aus der Werkzeughalteraufnahme (92) zu entnehmenden Werkzeughalter (90) freigibt.
60. Verfahren nach Ausführungsform 59, wobei die Maschinensteuerung (80) insbesondere unter Verwendung eines Programms oder Programmcodes, einen Werkzeugantrieb (230, 250) für eine drehbar am Werkzeughalter (90) gehaltene Werkzeugspindel (216, 266) derart ansteuert, dass diese vor dem Einsetzen oder nach einem Entnehmen des Werkzeughalters (90) aus der Werkzeughalteraufnahme (92) in einer definierten Drehstellung steht und insbesondere stehen bleibt.
61. Verfahren zum Betreiben einer Werkzeugmaschine nach einer der voranstehenden Ausführungsformen oder nach einer der Ausführungsformen 47 bis 60, wobei die Maschinensteuerung (80), insbesondere unter Verwendung eines Programms oder Programmcodes, die Handhabungseinrichtung (60) derart steuert, dass diese den Werkzeughaltergreifer (98) beim Wechseln eines Werkzeughalters (90) durch den Arbeitsraum (50) bis zu der, insbesondere in einer Wechselposition stehenden, Werkzeughalteraufnahme (92) längs eines abgespeicherten Werkzeugwechselpfades bewegt.
62. Verfahren nach Ausführungsform 61, wobei die Maschinensteuerung (80), insbesondere unter Verwendung eines Programms oder Programmcodes, eine manuell gesteuerte oder manuell vorgegebene Bewegung des Werkzeughaltergreifers (98) erfasst und abspeichert und den Werkzeughaltergreifer (98) entsprechend dieses Werkzeugwechselpfades zu dieser Werkzeughalteraufnahme (92) bewegt.
63. Verfahren zum Betreiben einer Werkzeugmaschine gemäß einer der voranstehenden Ausführungsformen oder nach einer der Ausführungsformen 47 bis 62, wobei die Maschinensteuerung (80), insbesondere unter Verwendung eines Programms oder Programmcodes, ein oder die Handhabungseinrichtung (60) derart steuert, dass die Handhabungseinrichtung (60) Werkstücke (W) zumindest aus einer Werkstückspindel (22) entnimmt und einer Werkstückzu- und/oder -abfuhreinrichtung (72) übergibt.
64. Verfahren nach einer der Ausführungsformen 47 bis 63, wobei die Maschinensteuerung (80), insbesondere unter Verwendung eines Programms oder Programmcodes, eine Werkstückspanneinrichtung (44) der Werkstückaufnahme (42) der jeweiligen Werkstückspindel (22) zum Entnehmen eines Werkstücks (W) deaktiviert oder nach dem Einsetzen eines Werkstücks (W) zum Spannen des Werkstücks (W) aktiviert.
65. Verfahren nach einer der Ausführungsformen 47 bis 64, wobei die Maschinensteuerung (80), insbesondere unter Verwendung eines Programms oder Programmcodes, die Handhabungseinrichtung (60) derart steuert, dass diese den Werkstückgreifer (68) längs eines definiert vorgegebenen Werkstückwechselpfades durch den Arbeitsraum (50) zu der Werkstückspindel 22 bewegt.
66. Verfahren nach Ausführungsform 65, wobei die Maschinensteuerung (80), insbesondere unter Verwendung eines Programms oder Programmcodes, eine manuell gesteuerte oder manuell vorgegebene Bewegung des Werkstückgreifers (68) durch den Arbeitsraum (50) und zu der Werkstückspindel (22) als Werkstückwechselpfad erfasst, abspeichert und nachfolgend als abgespeicherten Wechselpfad für das Auswechseln eines Werkstücks (W) aus dieser Werkstückspindel (22) einsetzt.
67. Verfahren zum Betreiben einer Werkzeugmaschine nach einer der voranstehenden Ausführungsformen oder nach einer der Ausführungsformen 47 bis 63, wobei die Maschinensteuerung (80), insbesondere unter Verwendung eines Programms oder Programmcodes, die Handhabungseinrichtung (60) derart steuert, dass diese mit ihrer Greiferaufnahme (66) einen Wechsel zwischen einem Werkstückgreifer (68) und einem Werkzeughaltergreifer (98) oder zwischen zwei Werkstückgreifern oder zwischen zwei Werkzeughaltergreifern durchführt.
68. Verfahren nach einer der Ausführungsformen 63 bis 67, wobei die Maschinensteuerung (80), insbesondere unter Verwendung eines Programms oder Programmcodes, erfasst, ob in der Greiferaufnahme (66) ein Werkstückgreifer (68) oder ein Werkzeughaltergreifer (98) aufgenommen ist.
69. Verfahren nach Ausführungsform 68, wobei die Maschinensteuerung (80), insbesondere unter Verwendung eines Programms oder Programmcodes, die Handhabungseinrichtung (60) derart steuert, dass diese zum Wechseln zwischen dem Werkstückgreifer (68) und dem Werkzeughaltergreifer (98) oder zwischen zwei Werkstückgreifern oder zwischen zwei Werkzeughaltergreifern einen derselben in dem Greiferspeicher (100) ablegt und den anderen derselben aus dem Greiferspeicher (100) entnimmt.
70. Verfahren nach einer der Ausführungsformen 47 bis 69, wobei die Maschinensteuerung (80), insbesondere unter Verwendung eines Programms oder Programmcodes, mittels der Handhabungseinrichtung (60) eine Codierung am Werkstückgreifer (68) und/oder am Werkzeughaltergreifer (98) erfasst.
71. Verfahren nach einer der Ausführungsformen 68 bis 70, wobei die Maschinensteuerung (80) insbesondere unter Verwendung eines Programms oder Programmcodes aufgrund der Position des Werkstückgreifers (68) oder des Werkzeughaltergreifers (98) in dem Greiferspeicher (100) diese identifiziert.

Die Erfindung betrifft nicht nur eine Mehrspindelwerkzeugmaschine sondern außerdem auch eine Werkzeugmaschine, umfassend ein Maschinengestell, eine am Maschinengestell gehaltene Werkstückspindel mit einer Werkstückaufnahme zur Aufnahme eines in einem Arbeitsraum zu bearbeitenden Werkstücks und mindestens einen in dem Arbeitsraum angeordneten Werkzeugträger mit einer Werkzeughalteraufnahme, in welche ein Werkzeughalter einsetzbar ist, eine an dem Maschinengestell angeordnete mehrachsige Handhabungseinrichtung, mit welcher Werkstücke in die Werkstückspindel einsetzbar und/oder aus dieser entnehmbar sind, sowie eine Maschinensteuerung zur Steuerung der Werkzeugmaschine und der Handhabungseinrichtung bei einem Werkstückwechsel.

Bei einer derartigen Werkzeugmaschine besteht die Forderung den gesamten Bearbeitungsvorgang möglichst automatisiert durchzuführen.

Der Erfindung liegt daher die Aufgabe zugrunde, eine Werkzeugmaschine der gattungsgemäßen Art derart zu verbessern, dass diese möglichst weitgehend automatisiert arbeiten kann.

Diese Aufgabe wird bei einer Werkzeugmaschine der vorstehend beschriebenen Art erfindungsgemäß dadurch gelöst, dass mit der Handhabungseinrichtung ebenfalls gesteuert durch die Maschinensteuerung mindestens ein Werkzeughalter in die mindestens eine Werkzeughalteraufnahme einsetzbar und aus dieser entnehmbar ist.

Diese Werkzeugmaschine weist insbesondere auch eines oder mehrere der vorstehend genannten Werkzeugmaschinen-Merkmale auf.

Die vorstehende Beschreibung erfindungsgemäßer Lösungen umfasst daher außerdem insbesondere auch eine Werkzeugmaschine mit den durch die nachfolgenden durchnummerierten Ausführungsformen definierten verschiedenen Merkmalskombinationen:
1. Werkzeugmaschine umfassend ein Maschinengestell (10), eine am Maschinengestell (10) gehaltene Werkstückspindel (22) mit einer Werkstückaufnahme (42) zur Aufnahme eines in einem Arbeitsraum (50) zu bearbeitenden Werkstücks (W), mindestens einen in dem Arbeitsraum (50) angeordneten Werkzeugträger (28) mit einer Werkzeughalteraufnahme (92), in welche ein Werkzeughalter (90) einsetzbar ist, eine an dem Maschinengestell (10) angeordnete mehrachsige Handhabungseinrichtung (60), mit welcher Werkstücke (W) in die Werkstückspindel (22) einsetzbar und/oder aus dieser entnehmbar sind, sowie eine Maschinensteuerung (80) zur Steuerung der Werkzeugmaschine und der Handhabungseinrichtung (60) bei einem Werkstückwechsel, wobei mit der Handhabungseinrichtung (60) ebenfalls gesteuert durch die Maschinensteuerung (80) mindestens ein Werkzeughalter (90) in die mindestens eine Werkzeughalteraufnahme (92) einsetzbar und aus dieser entnehmbar ist.
2. Werkzeugmaschine nach Ausführungsform 1, wobei die Handhabungseinrichtung (60) eine Greiferaufnahme (66) aufweist, mittels welcher die Handhabungseinrichtung (60) entweder einen Werkstückgreifer (68) oder einen Werkzeughaltergreifer (98) aufnehmen kann.
3. Werkzeugmaschine nach Ausführungsform 2, wobei der Werkstückgreifer (68) und der Werkzeughaltergreifer (98) in einer Werkstückgreiferaufnahme (152) beziehungsweise einer Werkzeughaltergreiferaufnahme (154) eines Greiferspeichers (100) ablegbar sind.
4. Werkzeugmaschine nach Ausführungsform 3, wobei der Greiferspeicher (100) außerhalb des Arbeitsraums (50) angeordnet ist.
5. Werkzeugmaschine nach Ausführungsform 3 oder 4, wobei der Greiferspeicher (100) außerhalb einer Maschinenverhaubung (74) angeordnet ist.
6. Werkzeugmaschine nach einer der Ausführungsformen 2 bis 5, wobei die Maschinensteuerung (80) erfasst, ob der Werkstückgreifer (68) und der Werkzeughaltergreifer (98) in der Greiferaufnahme (66) der Handhabungseinrichtung (60) aufgenommen ist.
7. Werkzeugmaschine nach Ausführungsform 6, wobei die Maschinensteuerung (80) eine Codierung am Werkstückgreifer (68) und am Werkzeughaltergreifer (98) erfasst.
8. Werkzeugmaschine nach einer der Ausführungsformen 3 bis 7, wobei die Maschinensteuerung (80) den Werkstückgreifer (68) und den Werkzeughaltergreifer (98) aufgrund von deren Position im Greiferspeicher (100) erfasst.
9. Werkzeugmaschine nach einer der voranstehenden Ausführungsformen, wobei mit der Handhabungseinrichtung (60) die Werkzeughalter (90) gesteuert durch die Maschinensteuerung (80) in ein Werkzeughaltermagazin (96) einsetzbar oder aus diesem entnehmbar ist.
10. Werkzeugmaschine nach Ausführungsform 9, wobei das Werkzeughaltermagazin (96) ein durch einen Antrieb (97) bewegbares Magazinelement (95) zur Aufnahme der Werkzeughalter (90) aufweist, und der Antrieb (97) von der Maschinensteuerung steuerbar ist.
11. Werkzeugmaschine nach Ausführungsform 9 oder 10, wobei das Werkzeughaltermagazin (96) außerhalb des Arbeitsraums (50) angeordnet ist.
12. Werkzeugmaschine nach einer der Ausführungsformen 9 bis 11, wobei das Werkzeughaltermagazin (96) außerhalb einer Maschinenverhaubung (74) angeordnet ist.
13. Werkzeugmaschine nach einer der voranstehenden Ausführungsformen, wobei der Werkzeugträger (28) ein die Werkzeughalteraufnahme (92) tragendes Werkzeugschlittensystem (30) aufweist.
14. Werkzeugmaschine nach Ausführungsform 13, wobei das Werkzeugschlittensystem (30) mindestens in einer X-Bearbeitungsrichtung relativ der Werkstückspindel (22) bewegbar ist.
15. Werkzeugmaschine nach einer der voranstehenden Ausführungsformen, wobei der Werkzeughalter (90) in die Werkzeughalteraufnahme (92) in einer ungefähr parallel zu einer Werkstückspindelachse (24) der jeweiligen Werkstückspindel (22) verlaufenden Einsetzrichtung (178) einsetzbar ist.
16. Werkzeugmaschine nach einer der Ausführungsformen 1 bis 15, wobei der Werkzeughalter (90) in die Werkzeughalteraufnahme (92) in Richtung quer zu einer Werkstückspindelachse (24) der jeweiligen Werkstückspindel (22) verlaufenden Einsetzrichtung (288) einsetzbar ist.
17. Werkzeugmaschine nach einer der voranstehenden Ausführungsformen, wobei mit der Maschinensteuerung (80) eine Fixiervorrichtung (180) zur Fixierung des Werkzeughalters (90) in der Werkzeughalteraufnahme (92) steuerbar ist.
18. Werkzeugmaschine nach einer der voranstehenden Ausführungsformen, wobei zur Bildung der Fixiervorrichtung (180) die Werkzeughalteraufnahme (92) und der Werkzeughalter (90) zusammenwirkende Formschlusselemente (176, 182, 184, 292, 300) aufweisen, welche bei einem Einsetzen des Werkzeughalters (92) in die Werkzeughalteraufnahme (92) formschlüssig in Eingriff bringbar sind.
19. Werkzeugmaschine nach Ausführungsform 18, wobei der Werkzeugträger (28) einen Werkzeugschlitten (156) mit einer sich in diesen hinein erstreckenden Fixieraufnahme (174) aufweist, in welche ein Fixierkörper (176) des Werkzeughalters (160) durch Bewegen desselben in einer Einsetzrichtung (178) einsteckbar und in einem eingesetzten Zustand durch Fixierung desselben in der Fixieraufnahme (174) durch ein Formschlusselement (182) festlegbar ist.
20. Werkzeugmaschine nach Ausführungsform 19, wobei das Formschlusselement ein Fixierkeilkörper (182) ist, der in dem Werkzeugschlitten (156) in einer quer zur Einsetzrichtung (178) verlaufenden Bewegungsrichtung zwischen einer Freigabestellung und einer Fixierstellung bewegbar ist und der Fixierkeilkörper (182) in der Fixierstellung mit einer Keilaufnahme (184) des Fixierkörpers (176) zusammenwirkt.
21. Werkzeugmaschine nach Ausführungsform 20, wobei der Fixierkeilkörper (182) in dem Werkzeugschlitten (156) linear bewegbar geführt ist und mit einer Keilfläche (186) auf eine Keilfläche (188) der Keilaufnahme (184) des Fixierkörpers (176) wirkt.
22. Werkzeugmaschine nach Ausführungsform 21, wobei der Fixierkeilkörper (182) durch einen von der Maschinensteuerung (80) gesteuerten Antrieb (200) zwischen der Fixierstellung und der Freigabestellung bewegbar ist.
23. Werkzeugmaschine nach einer der Ausführungsformen 1 bis 18, wobei der Werkzeugträger (28) einen Werkzeugschlitten (156) mit einer Werkzeughalteraufnahmeeinheit (250) aufweist, in die der Werkzeughalter (260, 370) in einer Einsetzrichtung (288) einsetzbar ist, welche in einer quer zur Werkstückspindelachse (24) verlaufenden Ebene liegt.
24. Werkzeugmaschine nach Ausführungsform 23, wobei der Werkzeughalter (260, 370) einen Hohlschaftkegel (274) aufweist, welcher in die eine Kegelaufnahme (274) aufweisende Werkzeughalteraufnahmeeinheit (250) einsetzbar ist.
25. Werkzeugmaschine nach Ausführungsform 24, wobei der Hohlschaftkegel (274) eine Spannkontur (292) aufweist, mit welcher eine Spanneinheit (300) der Werkzeughalteraufnahmeeinheit (250) zusammenwirkt.
26. Werkzeugmaschine nach Ausführungsform 25, wobei die Spanneinheit (300) durch eine Spannbetätigungseinheit (320) in Richtung ihrer Spannstellung beaufschlagbar ist, in welcher diese den Hohlschaftkegel (274) spannend fixiert.
27. Werkzeugmaschine nach einer der Ausführungsformen 23 bis 26, wobei die Spanneinheit (300) in der Spannstellung den Hohlschaftkegel (274) in Richtung der Kegelachse (286) in die Kegelaufnahme (282) einzieht und radial zur Kegelachse (286) an die Kegelaufnahme (282) anpresst.
28. Werkzeugmaschine nach einer der voranstehenden Ausführungsformen, wobei an dem Werkzeugschlittensystem (30) ein Werkzeugantrieb (220, 350) stationär angeordnet ist, mit welchem eine drehbar in dem Werkzeughalter (90) gelagerte Werkzeugspindel (218, 266) antreibbar ist.
29. Werkzeugmaschine nach Ausführungsform 28, wobei der Werkzeugantrieb (230, 350) mittels einer Kupplung (224, 340) mit der Werkzeugspindel (218, 266) kuppelbar ist.
30. Werkzeugmaschine nach Ausführungsform 29, wobei die Kupplung (224, 340) derart ausgebildete Kupplungselemente aufweist, dass diese beim Einsetzen des Werkzeughalters (90) in die Werkzeughalteraufnahme (92) in Eingriff bringbar sind.
31. Werkzeugmaschine nach Ausführungsform 30, wobei eines der Kupplungselemente (226, 338) eine sich quer zur Drehachse erstreckende Aufnahme und das andere der Kupplungselemente (228, 336) einen sich quer zur Drehachse erstreckenden Eingriff für die Aufnahme aufweist.
32. Werkzeugmaschine nach einer der Ausführungsformen 28 bis 31, wobei der Werkzeughalter (90) mit einer Drehfixierung (234, 362) zum drehfesten Festlegen der drehbaren Werkzeugspindel (216, 266) versehen ist.
33. Werkzeugmaschine nach Ausführungsform 32, wobei die Drehfixierung (234, 362) bei in der Werkzeughalteraufnahme (92) fixiertem Werkzeughalter (90) selbsttätig in einer inaktiven Stellung steht und beim Lösen des fixierten Werkzeughalters selbsttätig in eine aktive drehfixierende Stellung übergeht.
34. Werkzeugmaschine nach einer der voranstehenden Ausführungsformen, wobei die Werkzeugmaschine eine Mehrspindelwerkzeugmaschine ist, bei welcher die mehreren Werkzeugspindeln (22) in einer um eine Spindeltrommelachse (20) angeordnet sind.
35. Werkzeugmaschine nach Ausführungsform 34, wobei die Spindelachsen (24) der Werkstückspindeln (22) parallel zu der Spindeltrommelachse (20) ausgerichtet sind.

Darüber hinaus betrifft die Erfindung nicht nur ein Verfahren zum Betreiben einer Mehrspindelwerkzeugmaschine sondern außerdem auch ein Verfahren zum Betreiben einer Werkzeugmaschine gemäß einem oder mehreren der vorstehend beschriebenen Merkmale, wobei die Maschinensteuerung, insbesondere unter Verwendung eines Programms oder Programmcodes, die Handhabungseinrichtung derart steuert, dass die Handhabungseinrichtung einerseits Werkstücke zumindest aus einer Werkstückspindel entnimmt und einer Werkstückzu- und/oder -abfuhreinrichtung übergibt und andererseits die Handhabungseinrichtung aus einem Werkzeughaltermagazin mindestens einen Werkzeughalter entnimmt und in mindestens eine Werkzeughalteraufnahme des mindestens einen Werkzeugträgers einsetzt.

Der Vorteil der erfindungsgemäßen Lösung ist daher darin zu sehen, dass mit einer einzigen Handhabungseinrichtung mindestens ein Einsetzen eines Werkzeughalters in einen Werkzeugträger durchgeführt werden kann.

Vorzugsweise ist außerdem vorgesehen, dass die Maschinensteuerung, insbesondere unter Verwendung eines Programms oder Programmcodes, die Handhabungseinrichtung derart steuert, dass auch mit dieser Werkstücke von der Werkstückzu- und/oder -abfuhreinrichtung in eine Werkstückspindel eingesetzt werden.

Ferner ist vorzugsweise gemäß einer vorteilhaften Weiterbildung des erfindungsgemäßen Verfahrens vorgesehen, dass die Maschinensteuerung, insbesondere unter Verwendung eines Programms oder Programmcodes, die Handhabungseinrichtung derart steuert, dass diese einen Werkzeughalter aus einer Werkzeughalteraufnahme entnimmt und beispielsweise in einem Werkzeughaltermagazin ablegt.

Dieses Verfahren weist insbesondere auch eines oder mehrere der vorstehend erläuterten Verfahrensmerkmale auf.

36. Verfahren zum Betreiben einer Werkzeugmaschine gemäß einer der Ausführungsformen 1 bis 35, wobei die Maschinensteuerung (80), insbesondere unter Verwendung eines Programms oder Programmcodes, die Handhabungseinrichtung (60) derart steuert, dass die Handhabungseinrichtung (60) einerseits Werkstücke (W) zumindest aus einer Werkstückspindel (22) entnimmt und einer Werkstückzu- und/oder -abfuhreinrichtung (72) übergibt und andererseits die Handhabungseinrichtung (60) aus einem Werkzeughaltermagazin (96) mindestens einen Werkzeughalter (90) entnimmt und in mindestens eine Werkzeughalteraufnahme (92) des mindestens einen Werkzeugträgers (28) einsetzt.

37. Verfahren nach Ausführungsform 36, wobei die Maschinensteuerung (80), insbesondere unter Verwendung eines Programms oder Programmcodes, die Handhabungseinrichtung (60) derart steuert, dass diese mit ihrer Greiferaufnahme (66) einen Wechsel zwischen einem Werkstückgreifer (68) und einem Werkzeughaltergreifer (98) durchführt.

38. Verfahren nach Ausführungsform 36 oder 37, wobei die Maschinensteuerung (80), insbesondere unter Verwendung eines Programms oder Programmcodes, erfasst, ob in der Greiferaufnahme (66) ein Werkstückgreifer (68) oder ein Werkzeughaltergreifer (98) aufgenommen ist.

39. Verfahren nach Ausführungsform 38, wobei die Maschinensteuerung (80), insbesondere unter Verwendung eines Programms oder Programmcodes, die Handhabungseinrichtung (60) derart steuert, dass diese zum Wechseln zwischen dem Werkstückgreifer (68) und dem Werkzeughaltergreifer (98) einen derselben in einem Greiferspeicher (100) ablegt und den anderen derselben aus dem Greiferspeicher (100) entnimmt.

40. Verfahren nach einer der Ausführungsformen 36 bis 39, wobei die Maschinensteuerung (80), insbesondere unter Verwendung eines Programms oder Programmcodes, mittels der Handhabungseinrichtung (60) eine Codierung am Werkstückgreifer (68) und am Werkzeughaltergreifer (98) erfasst.

41. Verfahren nach einer der Ausführungsformen 36 bis 40, wobei die Maschinensteuerung (80), insbesondere unter Verwendung eines Programms oder Programmcodes, aufgrund der Position des Werkstückgreifers (68) und des Werkzeughaltergreifers (98) in dem Greiferspeicher (100) diese identifiziert.

42. Verfahren nach einer der Ausführungsformen 36 bis 41, wobei die Maschinensteuerung (80), insbesondere unter Verwendung eines Programms oder Programmcodes, die Handhabungseinrichtung (60) derart steuert, dass diese mindestens einen Werkzeughalter (90) in ein Werkzeughaltermagazin (96) einsetzt oder aus diesem entnimmt.

43. Verfahren nach Ausführungsform 42, wobei die Maschinensteuerung (80), insbesondere unter Verwendung eines Programms oder Programmcodes, mittels eines Antriebs (97) ein Magazinelement (95) des Werkzeughaltermagazins (96) so bewegt, dass mittels der Handhabungseinrichtung (60) ein Zugriff auf einen definierten Werkzeughalter (90) in dem Magazinelement (95) möglich ist.

44. Verfahren nach einer der Ausführungsformen 36 bis 43, wobei die Maschinensteuerung (80), insbesondere unter Verwendung eines Programms oder Programmcodes, ein Werkzeugschlittensystem (30) des Werkzeugträgers (28) derart bewegt, dass dessen Werkzeughalteraufnahme (92) in einer Wechselposition zum Auswechseln des Werkzeughalters (90) steht.

45. Verfahren nach Ausführungsform 44, wobei die Maschinensteuerung (80), insbesondere unter Verwendung eines Programms oder Programmcodes, die Handhabungseinrichtung (60) derart steuert, dass diese einen Werkzeughalter (90) in die in der Wechselposition stehende Werkzeughalteraufnahme (92) einsetzt oder aus dieser entnimmt.

46. Verfahren nach einer der Ausführungsformen 36 bis 45, wobei die Maschinensteuerung (80), insbesondere unter Verwendung eines Programms oder Programmcodes, die Handhabungseinrichtung (60) derart steuert, dass diese den Werkzeughalter (90) in die Werkzeughalteraufnahme (92) in einer ungefähr parallel zu einer Werkstückspindelachse (24) der jeweiligen Werkstückspindel (22) verlaufenden Einsetzrichtung (178) einsetzt oder entgegengesetzt zu dieser Einsetzrichtung aus dieser entnimmt.

47. Verfahren nach einer der Ausführungsformen 36 bis 45, wobei die Maschinensteuerung (80), insbesondere unter Verwendung eines Programms oder Programmcodes, die Handhabungseinrichtung (60) derart steuert, dass diese den Werkzeughalter (90) in die Werkzeughalteraufnahme (92) in einer Richtung quer zu einer Werkstückspindelachse (24) der jeweiligen Werkstückspindel (22) verlaufenden Einsetzrichtung (288) einsetzt oder entgegengesetzt zu dieser entnimmt.

48. Verfahren nach einer der Ausführungsformen 36 bis 47, wobei die Maschinensteuerung (80), insbesondere unter Verwendung eines Programms oder Programmcodes, eine Fixiervorrichtung (180) der Werkzeughalteraufnahme (92) derart ansteuert, dass diese einen in die Werkzeughalteraufnahme (92) eingesetzten Werkzeughalter (90) fixiert oder einen aus der Werkzeughalteraufnahme (92) zu entnehmenden Werkzeughalter (90) freigibt.

49. Verfahren nach einer der Ausführungsformen 36 bis 48, wobei die Maschinensteuerung (80), insbesondere unter Verwendung eines Programms oder Programmcodes, einen Werkzeugantrieb (220, 350) für eine drehbar in dem Werkzeughalter (90) gelagerte Werkzeugspindel (218, 266) derart ansteuert, dass dieser vor dem Einsetzen oder nach dem Entnehmen des Werkzeughalters (90) aus der Werkzeughalteraufnahme (92) in einer definierten Drehstellung steht, um insbesondere ein Abkuppeln oder Ankuppeln einer ebenfalls in einer definierten Drehstellung stehenden Werkzeugspindel (218, 266) des Werkzeughalters (90) zu erlauben.

50. Verfahren nach einer der Ausführungsformen 36 bis 49, wobei die Maschinensteuerung (80), insbesondere unter Verwendung eines Programms oder Programmcodes, eine Werkstückspanneinrichtung (44) der Werkstückaufnahme (42) der jeweiligen Werkstückspindel (22) zum Entnehmen eines Werkstücks (W) deaktiviert oder nach dem Einsetzen eines Werkstücks (W) zum Spannen des Werkstücks (W) aktiviert.

51. Verfahren nach einer der Ausführungsformen 36 bis 50, wobei die Maschinensteuerung (80), insbesondere unter Verwendung eines Programms oder Programmcodes, die Handhabungseinrichtung (60) derart steuert, dass diese den Werkstückgreifer (68) längs eines definiert vorgegebenen Werkstückwechselpfades durch den Arbeitsraum (50) zu der Werkstückspindel 22 bewegt.

52. Verfahren nach Ausführungsform 51, wobei die Maschinensteuerung (80), insbesondere unter Verwendung eines Programms oder Programmcodes, eine manuell gesteuerte oder manuell vorgegebene Bewegung des Werkstückgreifers (68) durch den Arbeitsraum (50) und zu der Werkstückspindel (22) als Werkstückwechselpfad erfasst, abspeichert und nachfolgend als abgespeicherten Wechselpfad für das Auswechseln eines Werkstücks (W) aus dieser Werkstückspindel (22) einsetzt.

53. Verfahren nach einer der Ausführungsformen 36 bis 52, wobei die Maschinensteuerung (80), insbesondere unter Verwendung eines Programms oder Programmcodes, die Handhabungseinrichtung (60) derart steuert, dass diese den Werkzeughaltergreifer (98) beim Wechseln eines Werkzeughalters (90) durch den Arbeitsraum (50) bis zu der, insbesondere in einer Wechselposition stehenden, Werkzeughalteraufnahme (92) längs eines abgespeicherten Werkzeugwechselpfades bewegt.

54. Verfahren nach Ausführungsform 53, wobei die Maschinensteuerung (80), insbesondere unter Verwendung eines Programms oder Programmcodes, eine manuell gesteuerte oder manuell vorgegebene Bewegung des Werkzeughaltergreifers (98) erfasst und abspeichert und den Werkzeughaltergreifer (98) entsprechend dieses Werkzeughalterwechselpfades zu dieser Werkzeughalteraufnahme (92) bewegt.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine perspektivische Gesamtansicht einer Mehrspindelwerkzeugmaschine als Beispiel für eine erfindungsgemäße Werkzeugmaschine;
- Fig. 2: eine vergrößerte perspektivische Aufsicht einer Spindeltrommel der Mehrspindelwerkzeugmaschine mit den Werkstückspindeln und den den einzelnen Spindelstationen zugeordneten Werkzeugträgern sowie einer Handhabungseinrichtung mit einem in dieser angeordneten Werkstückgreifer;
- Fig. 3: eine noch weiter vergrößerte perspektivische Aufsicht einer Stirnseite der Spindeltrommel mit den Werkstückspindeln in den einzelnen Spindelstationen und einer vergrößerten Draufsicht auf die Werkzeugträger und deren Werkzeugschlittensysteme;
- Fig. 4: eine Gesamtansicht ähnlich Fig. 1 mit Darstellung der Werkzeugmaschine mit einer Maschinenverhaubung;
- Fig. 5: eine perspektivische Darstellung einer Greiferaufnahme der Handhabungseinrichtung als Teil eines Schnellwechselsystems ist;
- Fig. 6: eine vergrößerte Darstellung des Schnellwechselsystems mit einem an einem Schnellwechselkopf fixierten Schnellwechseladapter;
- Fig. 7: eine vergrößerte Darstellung der Verriegelung des Schnellwechseladapters an dem Schnellwechselkopf;
- Fig. 8: eine perspektivische Darstellung der Werkzeugmaschine entsprechend Fig. 1 mit der Handhabungseinrichtung, welche den Werkstückgreifer in einem Greiferspeicher ablegt oder greift;
- Fig. 9: eine perspektivische Darstellung entsprechend Fig. 8, bei welcher die Handhabungseinrichtung gesteuert durch die Maschinensteuerung mit einem Werkzeughaltergreifer auf einen Werkzeughalter in einem Werkzeughaltermagazin zugreift;
- Fig. 10: eine Darstellung ähnlich Fig. 9, bei welcher die Handhabungseinrichtung gesteuert durch die Maschinensteuerung mit dem Werkzeughaltergreifer auf einen an einem Werkzeugträger gehaltenen Werkzeughalter zugreift;
- Fig. 11: eine ausschnittsweise vergrößerte perspektivische Darstellung von Werkzeugträgern mit Werkzeugschlittensystemen und einem auf einem Werkzeugschlitten eines Werkzeugschlittensystems sitzenden Werkzeughalter;
- Fig. 12: eine Seitenansicht eines Werkzeugträgers mit dem in Fig. 11 dargestellten Werkzeugschlitten und einem auf diesem Werkzeugschlitten sitzenden Werkzeughalter;
- Fig. 13: eine Seitenansicht gemäß Fig. 12 in teilweise aufgebrochener Darstellung im Bereich einer Fixiervorrichtung und einer Spannbetätigungseinheit für die Fixiervorrichtung;
- Fig. 14: eine Darstellung des Werkzeugträgers ähnlich Fig. 12 allerdings mit einem Werkzeughalter für ein angetriebenes Werkzeug montiert auf dem Werkzeugschlitten des Werkzeugträgers und eines Werkzeugantriebs montiert auf dem Werkzeugschlitten;
- Fig. 15: einen Schnitt längs Linie 15-15 durch den Werkzeughalter in Fig. 14;
- Fig. 16: eine perspektivische Aufsicht des Werkzeugantriebs mit dem diesem zugeordneten Kupplungselement montiert auf dem Werkzeugschlitten des Werkzeugträgers;
- Fig. 17: einen Schnitt längs Linie 17-17 durch den Werkzeughalter in Fig. 14;
- Fig. 18: eine perspektivische Ansicht einer auf dem Werkzeugschlitten montierten Werkstückhalteraufnahmeeinheit für die Aufnahme eines weiteren Beispiels eines Werkzeughalters;
- Fig. 19: einen Längsschnitt durch die Werkzeughalteraufnahmeeinheit mit eingesetztem und fixiertem angetriebenem Werkzeughalter;
- Fig. 20: einen Schnitt durch die Werkzeughalteraufnahmeeinheit ähnlich Fig. 19 mit einem eingesetzten nicht angetriebenen Werkzeughalter;
- Fig. 21: eine Darstellung einer Werkzeugmaschine ähnlich Fig. 8 im Zusammenhang mit dem beschriebenen Ausführungsbeispiel des Werkzeughalters gemäß Fig. 18 und
- Fig. 22: eine vergrößerte ausschnittsweise Darstellung des Werkzeughaltermagazins und des Werkzeughaltergreifers gemäß Fig. 21.

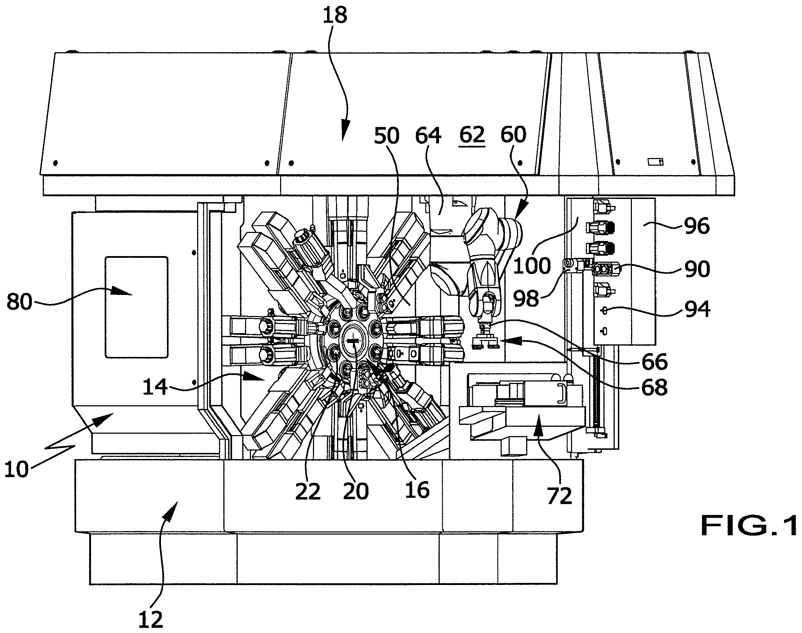

Ein Ausführungsbeispiel einer erfindungsgemäßen Drehmaschine, beispielsweise einer Mehrspindeldrehmaschine, dargestellt in Fig. 1, umfasst ein als Ganzes mit 10 bezeichnetes Maschinengestell, welches einen Unterbau 12, auf welchem ein Ständer 14 angeordnet ist, umfasst wobei in dem Ständer 14 eine Spindeltrommel 16 drehbar gelagert ist.

Ferner umfasst das Maschinengestell 10 einen auf dem Ständer 14 angeordneten Überbau 18.

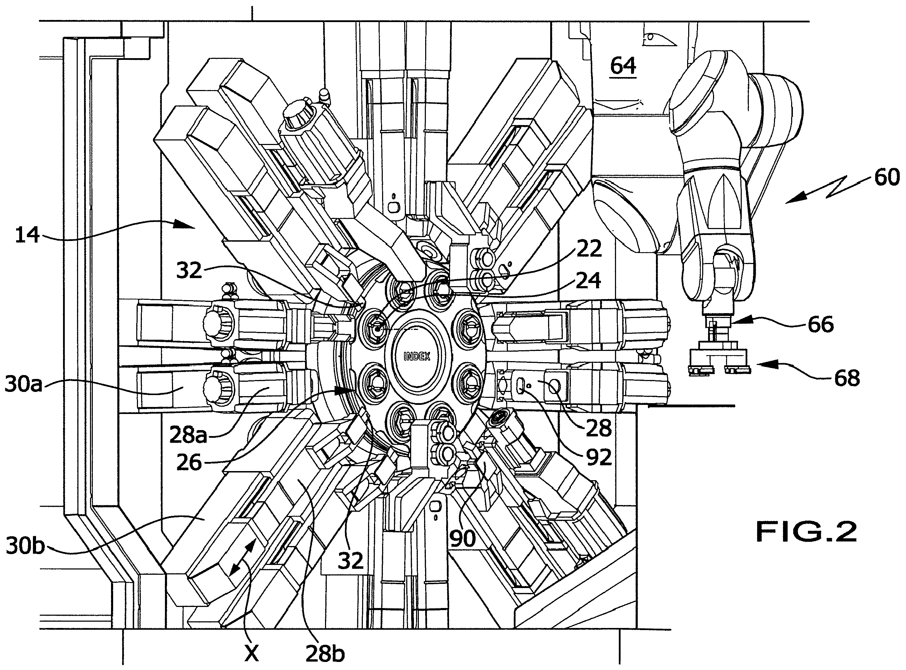

Die Spindeltrommel 16 ist, wie in Fig. 1 und 2 ebenfalls dargestellt, an dem Ständer 14 um eine Spindeltrommelachse 20 drehbar gelagert und weist eine Vielzahl von vorzugsweise in gleichem radialem Abstand um die Spindeltrommelachse 20 herum und insbesondere in gleichen Winkelabständen von einander angeordneten Werkstückspindeln 22 auf, die ihrerseits wiederum um parallel zur Spindeltrommelachse 20 ausgerichtete Spindelachsen 24 relativ zur Spindeltrommel 16 drehbar gelagert sind.

Vorzugsweise ist die Spindeltrommel 16 gegenüber dem Ständer 14 um die Spindeltrommelachse 20 derart drehbar, dass die einzelnen Werkstückspindeln 22 in relativ zum Ständer 14 feststehend angeordnete Spindelstationen 26 bewegbar sind, wobei die Spindelstationen 26 relativ zum Ständer 14 stationär angeordnet sind und somit durch Weiterschalten der Spindeltrommel 16 beispielsweise alle Werkstückspindeln 22 nacheinander in jeder der Spindelstationen 26 positionierbar sind.

Ferner ist jeder der Spindelstationen 26 mindestens ein Werkzeugträger 28, beispielsweise gegebenenfalls auch zwei oder mehr Werkzeugträger 28a und 28b, wie in Fig. 2 im Fall der Spindelstation 26 dargestellt, zugeordnet.

Jeder der Werkzeugträger 28 weist vorzugsweise ein Werkzeugschlittensystem 30 auf, im Fall der Spindelstation 26 ein Werkzeugschlittensystem 30a und 30b, wobei jedes Schlittensystem 30 radial zu der in der jeweiligen Spindelstation 26 stehenden Spindelachse 24 der jeweiligen Werkstückspindel 22 und somit in diesem Fall einer X-Richtung bewegbar ist.

Ferner sind die Schlittensysteme 30 zusätzlich so ausgebildet, dass diese auch in einer zur Spindelachse 24 der in der jeweiligen Spindelstation 26 stehenden Werkstückspindel 22 parallelen Richtung und somit in einer Z-Richtung bewegbar sind.

Eine derartige Mehrspindelwerkzeugmaschine ist beispielsweise in der EP 0 834 379 A beschrieben, auf welche hinsichtlich der Funktion einer derartigen Mehrspindeldrehmaschine vollinhaltlich Bezug genommen wird.

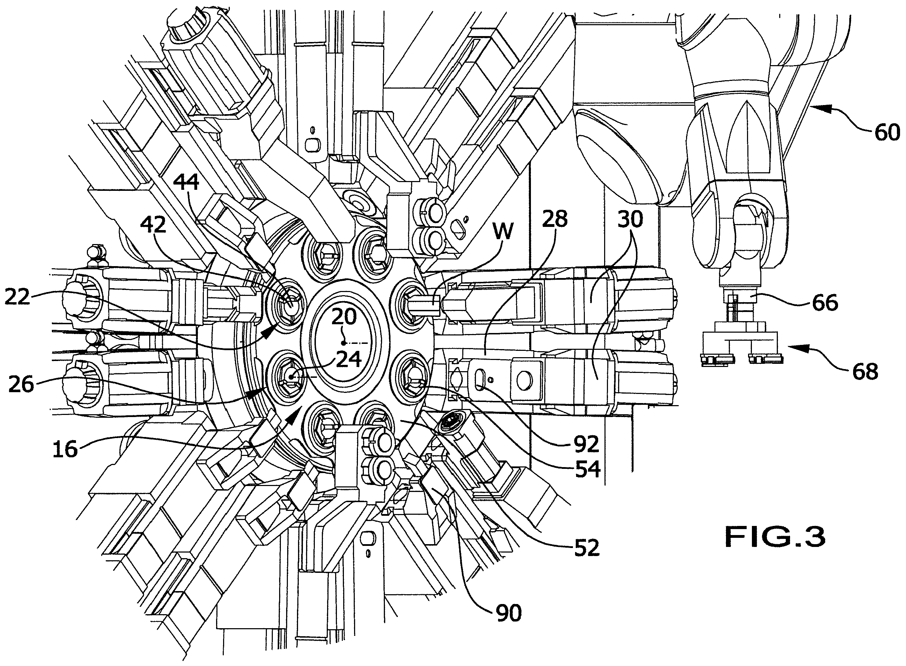

Ferner ist, wie in Fig. 3 dargestellt, jede der Werkstückspindeln 22 mit einer Werkstückaufnahme 42 versehen, in welche ein beispielhaft dargestelltes Werkstück W einsetzbar ist, wobei die jeweilige Werkstückaufnahme 42 noch zusätzlich eine Werkstückspanneinrichtung 44 zum Spannen des Werkstücks W aufweist.

Wie in Fig. 1 und 3 dargestellt, grenzt die Spindeltrommel 16 mit ihrer Stirnseite 52 an einen vor dieser liegenden Arbeitsraum 50 an und außerdem sind die Werkstückspindeln 22 ebenfalls so in der Spindeltrommel 16 angeordnet, dass deren in der Stirnseite 52 der Spindeltrommel 16 liegende Stirnseiten 54 ebenfalls an den Arbeitsraum 50 angrenzen und dabei beispielsweise geringfügig über die Stirnseite 52 der Spindeltrommel 16 überstehen, wobei sich von der jeweiligen Stirnseite 54 der Werkstückspindeln 22 ausgehend die Werkstückaufnahme 42 in diese Werkstückspindeln 22 hineinerstreckt und auch die Werkstückspanneinrichtung 44 als Teil der Werkstückaufnahme 42 ausgebildet ist und in der jeweiligen Werkstückspindel 22 angeordnet ist.

Zur Handhabung der in die Werkstückaufnahmen 42 einzusetzenden und von der jeweiligen Werkstückspanneinrichtung 44 dann zu spannenden fixierenden Werkstücke W ist, wie in Fig. 1 dargestellt, eine als Ganzes mit 60 bezeichnete Handhabungseinrichtung vorgesehen, die wie in Fig. 1 dargestellt, an dem Überbau 18 in einem auf einer dem Ständer 14 gegenüberliegenden Seite sich über den Arbeitsraum 50 hinaus erstreckenden Bereich 62 hängend angeordnet ist, so dass ein Fuß 64 der Handhabungseinrichtung 60 fest am Bereich 62, und zwar in einem Abstand von der Stirnseite 54 angeordnet ist, so dass vorzugsweise zwischen dem Fuß 64 der Handhabungseinrichtung 60 und der Stirnseite 52 der Spindeltrommel 16 der Arbeitsraum 50 liegt, in dem eine Bearbeitung der in den Werkstückspindeln 22 aufgenommenen Werkstücke W mittels von den Werkzeugträgern 28 gehaltenen Werkzeugen 32 erfolgen kann, wie nachfolgend noch im Detail erläutert.

Die Handhabungseinrichtung 60 trägt eine Greiferaufnahme 66 und ist beispielsweise als eine mehrachsige Schwenkarmhandhabungseinrichtung, mit welcher die Greiferaufnahme 66 vorzugsweise um insgesamt mindestens fünf, noch besser mindestens sechs Achsen schwenkbar ist, ausgebildet.

Die Handhabungseinrichtung 60 ermöglicht es einen in die Greiferaufnahme 66 eingesetzten Werkstückgreifer 68 so durch den Arbeitsraum 50 und aus dem Arbeitsraum 50 heraus zu bewegen, dass aus den einzelnen Werkstückaufnahmen 42 Werkstücke W entnommen und/oder auch eingesetzt werden können.

Die Werkstücke W werden zur Bearbeitung in der jeweiligen Werkstückspanneinheit 44 gespannt, um dann durch Antreiben der jeweiligen Werkstückspindel 22 in den einzelnen Spindelstationen 26 mit den Werkzeugen 32 bearbeitet zu werden, wobei dies durch Weiterschalten der Spindeltrommel 16 um die Spindeltrommelachse 20 erfolgt, so dass nach der Bearbeitung in einer der Spindelstationen 26 eine Bearbeitung mit dem mindestens einen dieser zugeordneten Werkzeugträger 28 erfolgt und nach Weiterschalten der Spindeltrommel 16 in der nächstfolgenden Spindelstation 26 wiederum eine Bearbeitung mit dem mindestens einer dieser Spindelstationen zugeordneten Werkzeugträger 28 erfolgen kann.

Nach der Bearbeitung des Werkstücks in mehreren Spindelstationen 26, beispielsweise 4 Spindelstationen 26 oder allen acht Spindelstationen 26, erfolgt dann ein Entnehmen des fertig bearbeiteten Werkstücks mittels der Handhabungseinrichtung 60 unter Einsatz des Werkzeuggreifers 68, wobei nach der Entnahme dieses fertig bearbeiteten Werkstücks W ein rohes Werkstück möglichst in derselben Werkstückspindel 22 wieder durch einen Vorschub einer Werkstückstange durch die jeweilige Werkstückspindel 22 oder seitens der Handhabungseinrichtung 60 mittels des Werkstückgreifers 68 eingesetzt wird.

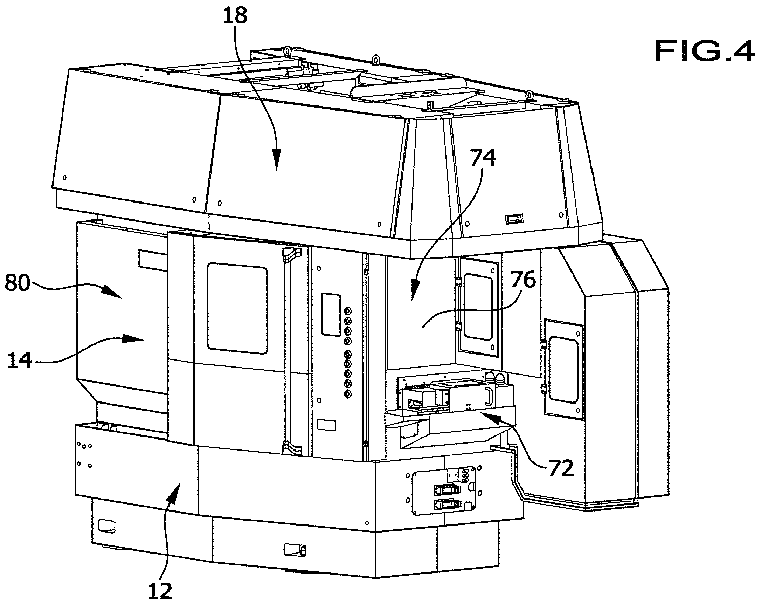

Die Zufuhr von rohen Werkstücken und die Abfuhr von fertig bearbeiteten Werkstücken erfolgt beispielsweise über eine Werkstückzu-/ und/oder -abfuhreinrichtung 72, die vorzugsweise außerhalb des Arbeitsraums 50 und insbesondere sogar außerhalb einer Maschinenverhaubung 74 angeordnet ist, wie in Fig. 4 dargestellt, wobei die Maschinenverhaubung 74 eine mit einer Tür 78 verschließbare Öffnung 76 aufweist, durch welche die Handhabungsvorrichtung 60 von innerhalb der Maschinenverhaubung 74 auf die Werkstückzu- und/oder -abfuhreinrichtung 72 zugreifen kann.

Die Steuerung der Handhabungseinrichtung 60 mitsamt des Werkstückgreifers 68 und auch das Betätigen der Werkstückspanneinrichtung 44 der Werkstückaufnahme 42 erfolgt in gleicher Weise wie auch das Bearbeiten der Werkstücke W mittels der Werkzeuge 32 durch eine als Ganzes mit 80 bezeichnete Maschinensteuerung, wie nachfolgend noch im Einzelnen dargelegt.

Die erfindungsgemäße Handhabungseinrichtung 60 dient jedoch nicht nur zum Einsetzen von rohen Werkstücken in die jeweilige Werkstückaufnahme 42 und entnehmen fertig bearbeiteter Werkstücke aus der jeweiligen Werkstückaufnahme 42, sondern wird auch dazu eingesetzt, Werkzeuge 32 tragende Werkzeughalter 90 in die jeweiligen Werkzeughalteraufnahmen 92 der Werkzeugträger 28 einzusetzen oder aus diesen zu entnehmen (Fig. 1 bis 3).

Hierzu ist ein Werkzeughaltermagazin 96 (Fig. 1) vorgesehen, welches vorzugsweise ebenfalls außerhalb des Arbeitsraums 50 und insbesondere auch außerhalb der Maschinenverhaubung 74 angeordnet ist, um eine Vielzahl von zur Verfügung stehenden Werkzeughaltern 90 mit entsprechenden Werkzeugen vorhalten zu können.

Ein derartiges Werkzeughaltermagazin 96 kann in unterschiedlichster Art und Weise ausgebildet sein.

Im einfachsten Fall weist dies ebenfalls stationäre Werkzeughalteraufnahmen 94 auf oder es kann auch an einem Magazinelement 95, beispielsweise einem Schlitten oder einer umlaufenden Kette, angeordnete und somit durch einen durch die Maschinensteuerung 80 gesteuerten Antrieb 97 zum Bewegen des Magazinelements 95 bewegbare Werkzeughalteraufnahmen 94 aufweisen (Fig. 1).

Zum Auswechseln der Werkzeughalter 90 ist vorzugsweise ein Werkzeughaltergreifer 98 vorgesehen, welcher ebenfalls in der Greiferaufnahme 66 der Handhabungseinrichtung 60 aufnehmbar ist, so dass die Handhabungseinrichtung 60 einerseits in der Lage ist, mit dem Werkstückgreifer 68 Werkstücke W zu greifen und andererseits in der Lage ist, mit dem Werkzeughaltergreifer 98 Werkzeughalter 90 zu greifen, diese aus der jeweiligen Werkzeughalteraufnahme 94 im Werkzeughaltermagazin 96 zu entnehmen und in die Werkzeughalteraufnahme 92 des gewünschten Werkzeugträgers 28 einzusetzen oder aus der Werkzeughalteraufnahme 92 eines Werkzeugträgers 28 zu entnehmen und in die Werkzeughalteraufnahme 94 des Werkzeughaltermagazins 96 einzusetzen, so dass mit derselben Handhabungseinrichtung 60, mit welcher ein Wechsel der Werkstücke möglich ist, auch ein Wechsel der Werkzeughalter 90 erfolgen kann.

Um den Werkstückgreifer 68 gegen einen Werkzeughaltergreifer 98 oder umgekehrt auswechseln zu können, ist ein als Ganzes mit 100 bezeichneter Greiferspeicher vorgesehen, der sowohl den Werkstückgreifer 68 als auch den Werkzeughaltergreifer 98 aufnehmen kann, um den Werkstückgreifer 68 gegen den Werkzeughaltergreifer 98 auszuwechseln oder den Werkzeughaltergreifer 98 gegen den Werkstückgreifer 68 auszuwechseln.

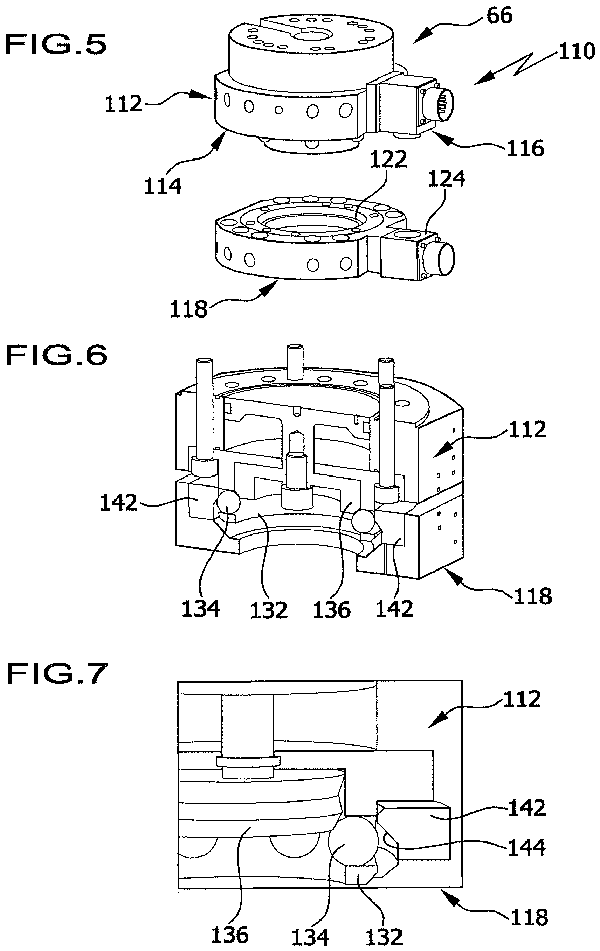

Vorzugsweise ist hierzu die Greiferaufnahme 66 der Handhabungseinrichtung 60 mit einem in Fig. 5 dargestellten Schnellwechselsystem 110 versehen, welches als Greiferaufnahme 66 einen Schnellwechselkopf 112 aufweist, der einerseits eine mechanische Schnittstelle 114 und andererseits eine Steuerungsschnittstelle 116 umfasst und mit einem jeweils mit dem Werkstückgreifer 68 und auch dem Werkzeughaltergreifer 98 verbundenen Schnellwechseladapter 118 zusammenwirkt, welcher ebenfalls eine mit der mechanischen Schnittstelle 114 verbindbare mechanische Schnittstellenaufnahme 122 und andererseits eine mit der Steuerungsschnittstelle 116 verbindbare Steuerungsschnittstellenaufnahme 124 aufweist.

Die mechanische Schnittstelle 114 umfasst beispielsweise wie in Fig. 6 und Fig. 7 dargestellt, einen Ringkörper 132, in welchem Verriegelungskörper 134 radial bewegbar aufgenommen sind und durch einen Betätigungskörper 136 radial nach außen bewegbar sind. Die mechanische Schnittstellenaufnahme 122 umfasst ihrerseits einen den Ringkörper 132 radial außenliegend umgreifenden Ringkörper 142, der mit einer Hinterschneidung 144 versehen ist, in welche die radial nach außen bewegten Verriegelungskörper 134 eingreifen können, um die mechanische Schnittstellenaufnahme 122 und somit den Werkstückgreifer 68 oder den Werkzeughaltergreifer 98 zu fixieren.

Ferner umfasst die Steuerungsschnittstellenaufnahme 124 für die Steuerungsschnittstelle 116 beispielsweise elektrische Kontakte, die mit der Steuerungsschnittstelle 116 dann zusammenwirken, wenn die mechanische Schnittstellenaufnahme 122 mit der mechanischen Schnittstelle 114 verbunden ist.

Auch das Schnellwechselsystem 110 ist durch die Maschinensteuerung 80 gesteuert, welche insbesondere den Schnellwechselkopf 112 so bewegt, dass dieser in den Schnellwechseladapter 118 eingreift und dabei beispielsweise mit dem Ringkörper 132 in den Ringkörper 142 eingreift, um dann den Betätigungskörper 136 so zu bewegen, dass dieser die Verriegelungskörper 134 radial nach außen bewegt, um den Ringkörper 142 mittels der Hinterschneidung 144 zu fixieren und gleichzeitig die Kontakte der Steuerungsschnittstelle 116 mit der Steuerungsschnittstellenaufnahme 124 zu verbinden.

Durch die Herstellung der Verbindung zwischen der Steuerungsschnittstelle 116 und der Steuerungsschnittstellenaufnahme 124 sind einerseits die Greiferfunktionen sowohl des Werkstückgreifers 68 als auch des Werkzeughaltergreifers 98 steuerbar, um die Greiffunktionen, wie Greifen oder loslassen, zu steuern und andererseits erkennt beispielsweise die Maschinensteuerung 80 über diese Verbindung zwischen der Steuerungsschnittstelle 116 und der Steuerungsschnittstellenaufnahme 122 welcher der Greifer, das heißt der Werkstückgreifer 68 oder der Werkzeughaltergreifer 98, für die Handhabungseinrichtung 60 zur Verfügung stehen.

Alternativ zum Erkennen des jeweiligen Greifers 68 oder 98 besteht aber auch die Möglichkeit, allein über die Position, in welcher der jeweilige Greifer 68 oder 98 in dem Greiferspeicher 100 aufgenommen wird, zu erkennen, ob der Handhabungseinrichtung 60 der Werkstückgreifer 68 oder der Werkzeughaltergreifer 98 zum Greifen von Werkstücken beziehungsweise Werkzeughaltern 90 zur Verfügung steht.

Dies setzt aber voraus, dass für den Werkstückgreifer 68 und für den Werkzeughaltergreifer 98 jeweils separate Speicherplätze in dem Greiferspeicher 100 vorgesehen sind, in denen diese durch die Handhandhabungseinrichtung 60 zum Speichern abgelegt werden, so dass allein durch den Speicherplatz des jeweiligen Greifers 68 beziehungsweise 98 im Greiferspeicher 100 eine eindeutige Identifikation desselben durch die Maschinensteuerung 60 möglich ist.

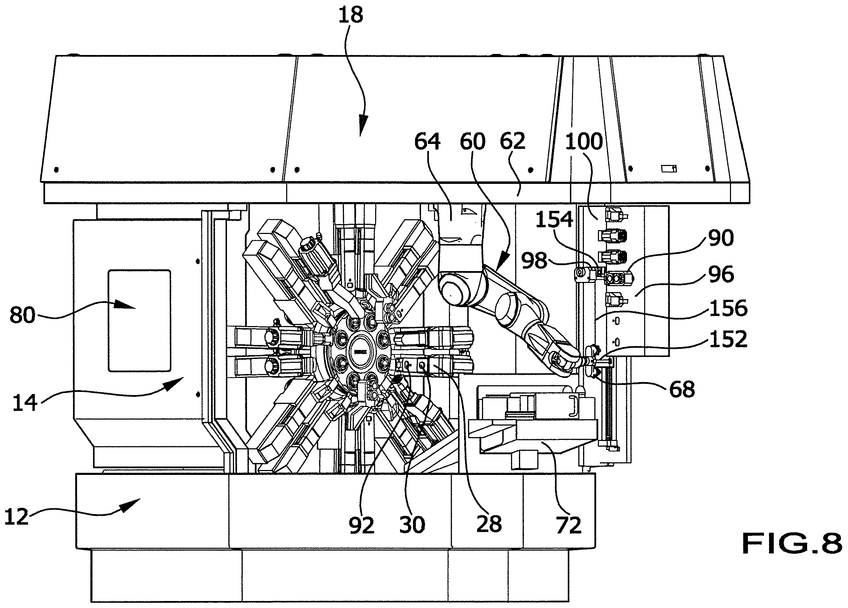

Dabei können bei einer Ausführungsform die Werkstückgreiferaufnahme 152 und die Werkzeughaltergreiferaufnahme 154 stationär in dem Greiferspeicher 100 angeordnet sein (Fig. 8).

Es ist aber auch beispielsweise denkbar, die Werkstückgreiferaufnahme 152 und die Werkzeughaltergreiferaufnahme 154 in dem Greiferspeicher 100 auf einem Schlitten 156 anzuordnen, der so verfahrbar ist, dass die Handhabungseinrichtung 60 in der Lage ist, in nur einer Zugriffsposition entweder auf den Werkstückgreifer 68 in der Werkstückgreiferaufnahme 152 oder auf den Werkzeughaltergreifer 98 in der Werkzeughaltergreiferaufnahme 154 zuzugreifen wobei in diesem Fall die Maschinensteuerung 80 aus der Position des Schlittens 156 des Greiferspeichers 100 erkennt, welchen der Greifer 68, 98 die Handhabungseinrichtung aufnimmt oder ablegt.

Soll beispielsweise ein Einwechseln eines der Werkzeughalter 98 aus dem Werkzeughaltermagazin 96 in eine Werkzeughalteraufnahme 92 eines der Werkzeugträger 28, insbesondere dessen Werkzeugschlittensystem 30, erfolgen, so legt die Handhabungseinrichtung 60, wie in Fig. 8 dargestellt, den Werkstückgreifer 68 in einer hierfür vorgesehenen Werkstückgreiferaufnahme 152 des Greiferspeichers 100 ab und entnimmt den Werkzeughaltergreifer 98 aus einer Werkzeughaltergreiferaufnahme 154 des Greiferspeichers 100.

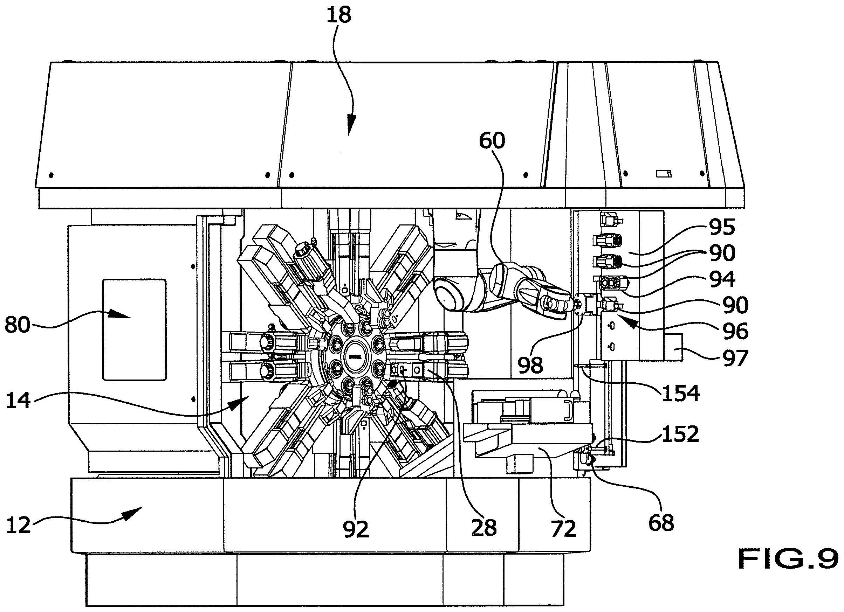

Ist in der Greiferaufnahme 66 der Werkzeughaltergreifer 98 aufgenommen, wie in Fig. 9 dargestellt, so hat die Handhabungseinrichtung 60 die Möglichkeit einen der Werkzeughalter 90 aus der jeweiligen Werkzeughalteraufnahme 94 des Werkzeughaltermagazins 96 zu greifen, aus dieser Werkzeughalteraufnahme 94 zu entnehmen und in die Werkzeughalteraufnahme 92 des Werkzeugträgers 28 einzusetzen, wie in Fig. 9 erkennbar.

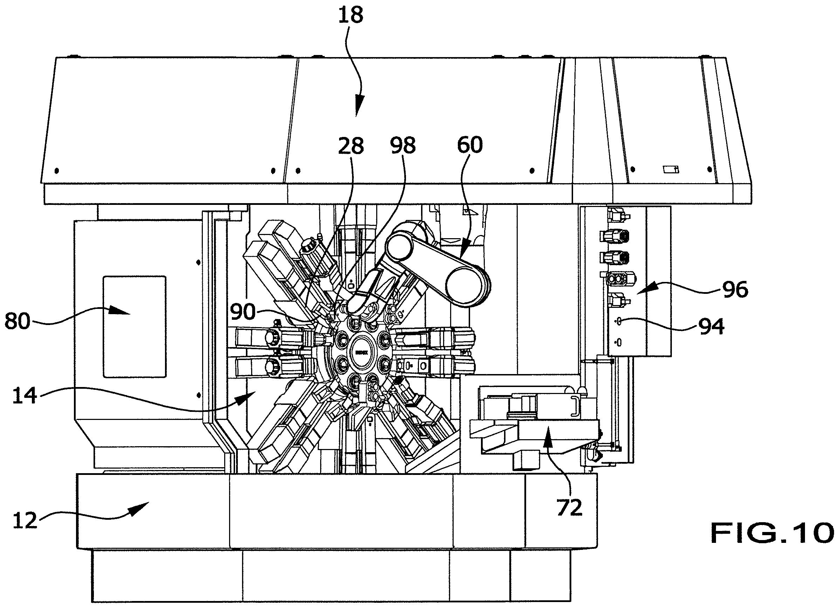

Danach besteht auch die Möglichkeit, wie in Fig. 10 dargestellt, einen anderen Werkzeughalter 90 aus einem anderen Werkzeugträger 28 mittels des Werkzeuggreifers 98 zu entnehmen und in einer für diesen vorgesehenen Werkzeughalteraufnahme 94 des Werkzeughaltermagazins 96 abzulegen, wie dies beispielsweise in Fig. 10 dargestellt ist.

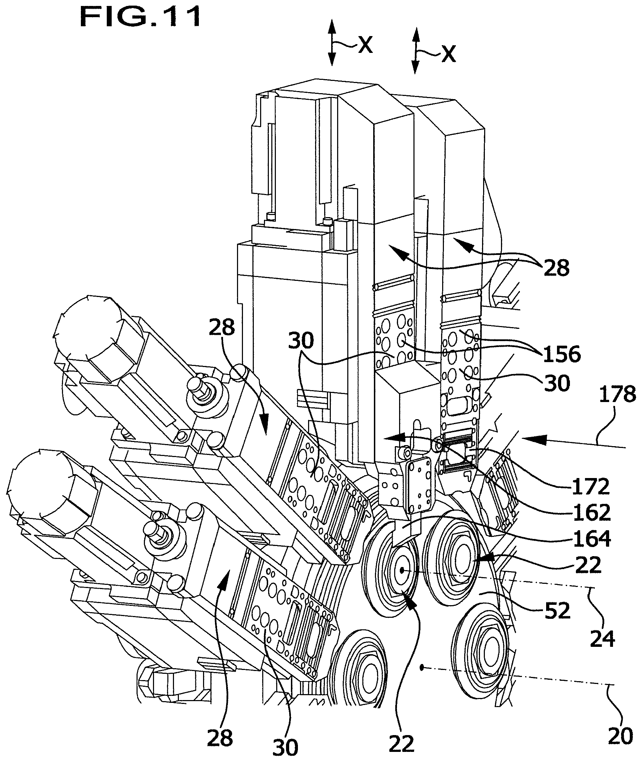

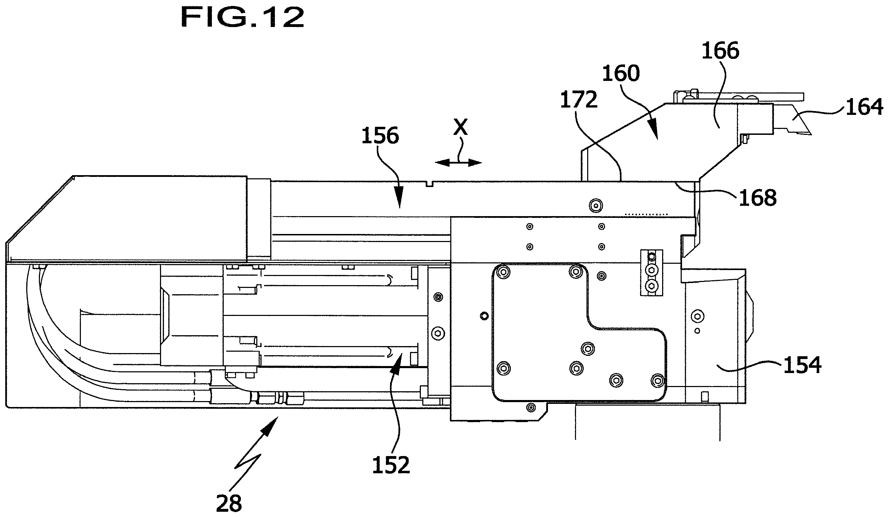

Ein erstes Ausführungsbeispiel eines in Fig. 11 und 12 dargestellten Werkzeugträgers 28 umfasst eine Werkzeugträgerbasis 152, die mit einem Schlittenantrieb 154 versehen ist, welcher einen nicht dargestellten Antriebsmotor aufweist, der beispielsweise in der Werkzeugträgerbasis 152 angeordnet ist und einen nicht sichtbaren Spindelantrieb antreibt, mit welchem ein auf der Werkzeugträgerbasis geführter Werkzeugschlitten 156 beispielsweise in der X-Richtung verschiebbar ist.

Auf dem Werkzeugschlitten 156 sitzt als Beispiel für einen Werkzeughalter 90 ein als Ganzes mit 160 bezeichneter Werkzeughalter in welchem ein feststehendes Werkzeug 164 fixiert ist.

Der Werkzeughalter 160 umfasst einen Werkzeughaltekörper 166, welcher sich mit einer Abstützseite 168 auf einer Auflageseite 172 des Werkzeugschlittens 156 abstützt.

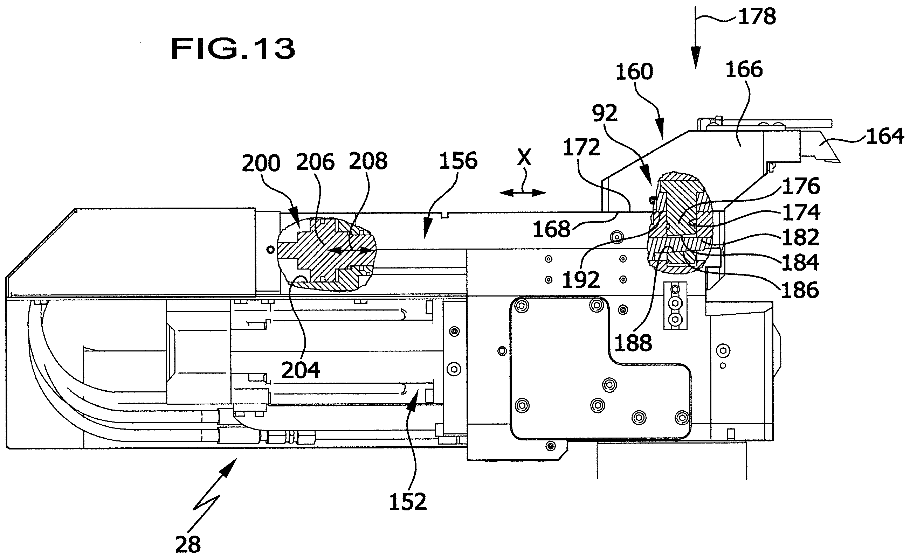

Ferner erstreckt sich in dem Werkzeugschlitten 156 ausgehend von der Auflageseite 172 in diese hinein eine Fixieraufnahme 174, zur Aufnahme eines in einer Einsetzrichtung 178 in die Fixieraufnahme 174 einsetzbaren Fixierkörpers 176, der fest mit dem Werkzeughalterkörper 166 verbunden ist und sich ausgehend von diesem erstreckt (Fig. 13).

Der Fixierkörper 176 ist dabei in der Fixieraufnahme 174 geführt und durch einen Fixierkeilkörper 182 beaufschlagbar, welcher einen Durchbruch 184 des Fixierkörpers 176 durchsetzt und dabei mit einer dem Werkzeughalterkörper 166 abgewandten Keilfläche 186 auf eine Keilfläche 188 des Durchbruchs 184 einwirkt, um somit den Fixierkörper 176 derart zu beaufschlagen, dass dieser mit der Abstützseite 168 in Richtung der Auflageseite 172 kraftbeaufschlagt ist.

Die Fixieraufnahme 174, der Fixierkörper 176 mit dem Durchbruch 184 und der Fixierkeilkörper 182 bilden eine Fixiervorrichtung 180.

Vorzugsweise sind neben der Fixieraufnahme 174 in der Abstützseite 168 und der Auflageseite 172 ineinandergreifende Verzahnungen 192 vorgesehen, welche durch den mit dem Fixierkeilkörper 182 beaufschlagten Fixierkörper 176 ebenfalls kraftbeaufschlagt in Eingriff gehalten werden, um den Werkzeughalterkörper 166 auf dem Werkzeugschlitten 156 sowohl unverschieblich als auch verdrehfest durch andrücken der Abstützseite 168 an der Auflageseite 172 starr zu fixieren.

Die Fixieraufnahme 174 bildet dabei zusammen mit der Auflageseite 172 die Werkzeughalteraufnahme 92 für den Werkzeughalter 160.

Zum gesteuerten Bewegen des Fixierkeilkörpers 182 ist in dem Werkzeugschlitten 156 noch eine Spannbetätigungseinheit 200, beispielsweise ausgebildet als hydraulischer Antrieb vorgesehen, welcher eine Zylinderkammer 204 aufweist, in welcher ein Kolben 206 durch Beaufschlagung mittels eines Hydraulikmediums in einer Verschieberichtung 208 bewegbar ist, um den Fixierkeilkörper 182 entweder mit dem Durchbruch 184 in Eingriff zu bringen oder aus diesem herauszuziehen, wobei durch das in Eingriff bringen mit dem Durchbruch 184 der Fixierkeilkörper 182 mit der Keilfläche 186 die Keilfläche 188 beaufschlagt, um den Fixierkörper 176 kraftbeaufschlagt in die Fixieraufnahme 174 einzuziehen.

Vorzugsweise wird dabei Spannbetätigungseinheit 200 ebenfalls durch die Maschinensteuerung 80 gesteuert, um einerseits den Werkzeughalter 160 in der Werkzeughalteraufnahme 92 zu fixieren und andererseits durch Zurückziehen des Fixierkeilkörpers 182 aus dem Durchbruch 184 des Fixierkörpers 176 den Werkzeughalter 160 zur Entnahme freizugeben.

Bei dem in Fig. 12 und 13 dargestellten Werkzeughalter 160 handelt es sich um einen Werkzeughalter 160 für ein feststehendes Werkzeug 164.

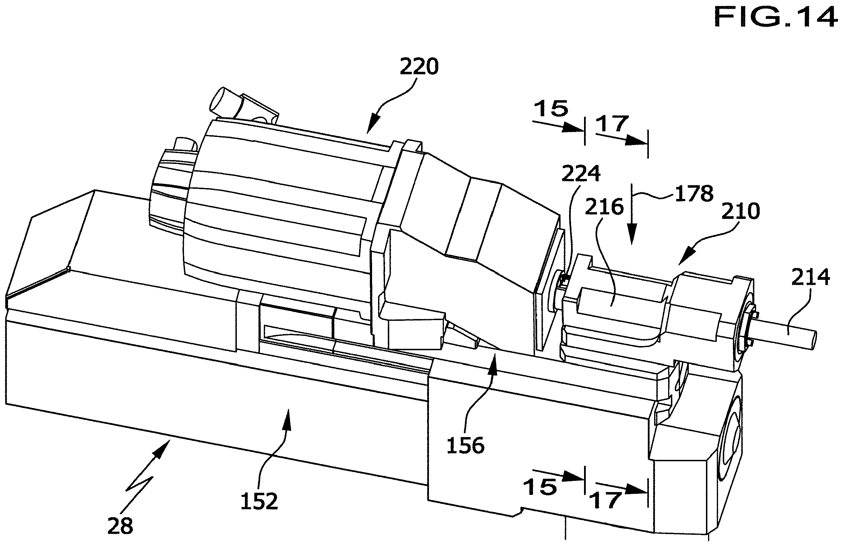

Ein weiteres Beispiel für einen Werkzeughalter 90 ist ein Werkzeughalter 210, dargestellt in Fig. 14, der als angetriebener Werkzeughalter ausgebildet ist, dessen Werkzeug 214 rotierend antreibbar ist, wobei dieses hierzu in dem Werkzeughalterkörper 216 mittels einer diesen durchsetzenden Werkzeugspindel 218 drehbar gelagert ist.

Dabei ist der Werkzeughalterkörper 216 in gleicher Weise wie bei dem Werkzeughalter 160 an dem Werkzeugschlitten 156 fixiert.

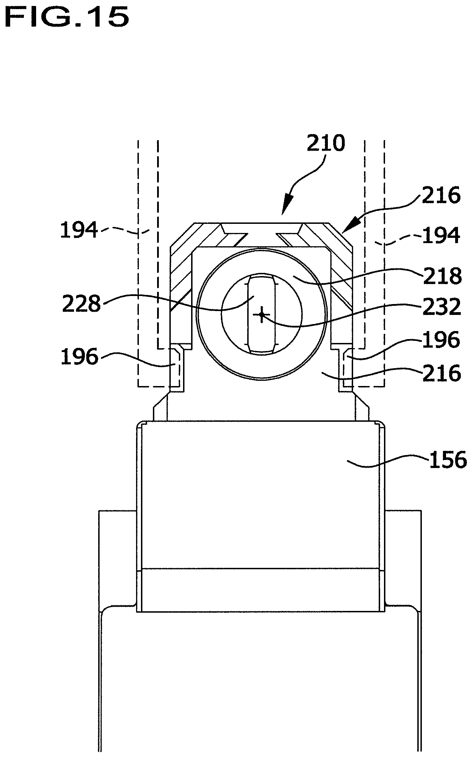

Zur Handhabung greift bei diesen Werkzeughaltern 160 und 210, wie beim Werkzeughalter 210 in Fig. 15 dargestellt, der Werkzeughaltergreifer 98 mit Greiferfingern 194 in seitliche Nuten 196 des Werkzeughalterkörpers 216 ein.

Zum Antreiben der Werkzeugspindel 218 ist ein als Ganzes mit 220 bezeichneter Werkzeugantrieb vorgesehen, der ebenfalls auf dem Werkzeugschlitten 156 angeordnet ist und mittels einer Kupplung 224 abtriebsseitig mit der Werkzeugspindel 218 kuppelbar ist, wobei die Kupplung 224 ein erstes, abtriebsseitig des Werkzeugantriebs 220 angeordnetes Kupplungselement 226 sowie ein antriebseitig der Werkzeugspindel 218 angeordnetes Kupplungselement 228 aufweist, die durch eine radiale Bewegung quer zu einer gemeinsamen Drehachse 232 außer Eingriff bringbar sind.

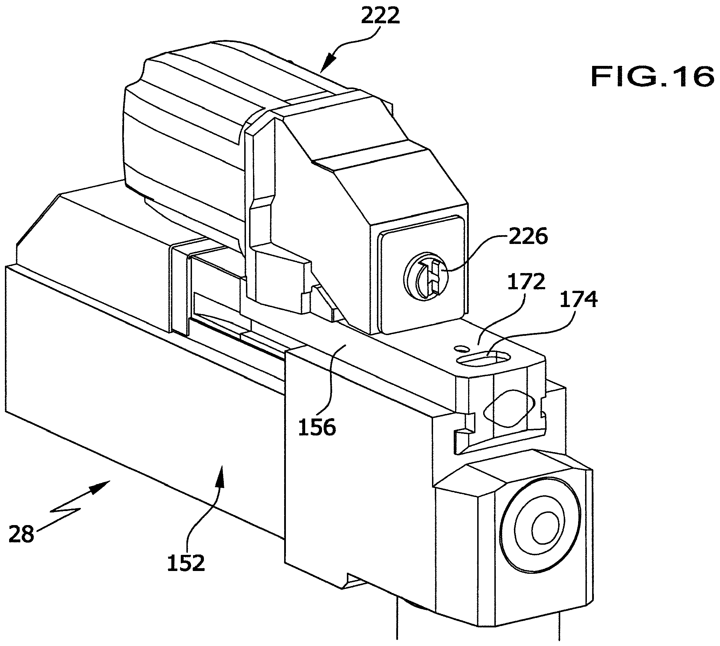

Beispielsweise ist das Kupplungselement 228 als Schwert ausgebildet, welches mit dem als Schwertaufnahme ausgebildeten Kupplungselement 226 in Eingriff bringbar ist, um die Werkzeugspindel 218 mit dem Antrieb 222 zu koppeln (Fig. 14, 16).

Um die Kupplungselemente 226 und 228 so auszurichten, dass diese durch eine Bewegung des Werkzeughalters 212 mittels der Handhabungseinrichtung 60 parallel zur Einsetzrichtung 178 des Fixierkörpers 176 in die Fixieraufnahme 174 in Eingriff bringbar sind, ist der Werkzeugantrieb 220 als drehlagensteuerbarer Antrieb ausgebildet, so dass die Kupplungselemente 226 und 228 in paralleler Ausrichtung zur Einsetzrichtung des Fixierkörpers 176 in die Fixieraufnahme 174 ausrichtbar sind.

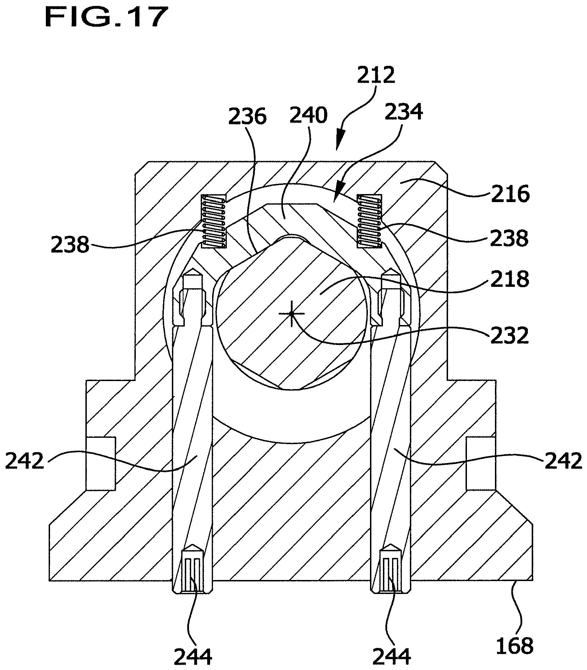

Um diese Ausrichtung auch beim Entnehmen und Wiedereinsetzen des Werkzeughalters 212 hinsichtlich der Drehlage der Werkzeugspindel 218 aufrechtzuerhalten, ist in dem Werkzeughalterkörper 216 eine Drehfixierung 234 vorgesehen, welche beispielsweise die Werkzeugspindel 218 in einem von einer Rotationssymmetrie zu deren Drehachse 232 abweichenden Bereich 236 durch federelastische Elemente 238 beaufschlagt fixieren kann, wobei dies beispielsweise durch einen U-förmigen Bügel 240 erfolgt, der an die Außenform des Bereichs 236 derart angepasst ist, dass die Werkzeugspindel 218 in lediglich zwei um 180° zueinander verdrehte Stellungen fixierbar ist (Fig. 17).

Das Lösen der Drehfixierung 234 erfolgt durch den Bügel 240 beaufschlagende Tastkörper 242, welche beim Einsetzen des Werkzeughalterkörpers 216 in die Werkzeughalteraufnahme 92 mit Tastflächen 244 auf der Auflageseite 172 aufsitzen und in diesem Fall den Bügel 240 gegen die Kraft der federelastischen Elemente 238 beaufschlagen und somit die Drehfixierung der Werkzeugspindel 218 lösen.

Nach einer Bearbeitung erfolgt durch Ansteuerung des Antriebs 222 die Ausrichtung der Werkzeugspindel 218 dergestalt, dass diese wiederum in der durch die Drehfixierung 234 festlegbaren Stellung steht und somit die Kupplungselemente 226 und 228 bei einer Entnahme des Werkzeughalters 212 durch Bewegen entgegengesetzt zur Einsetzrichtung 178 mittels der Handhabungseinrichtung 60 außer Eingriff kommen können.

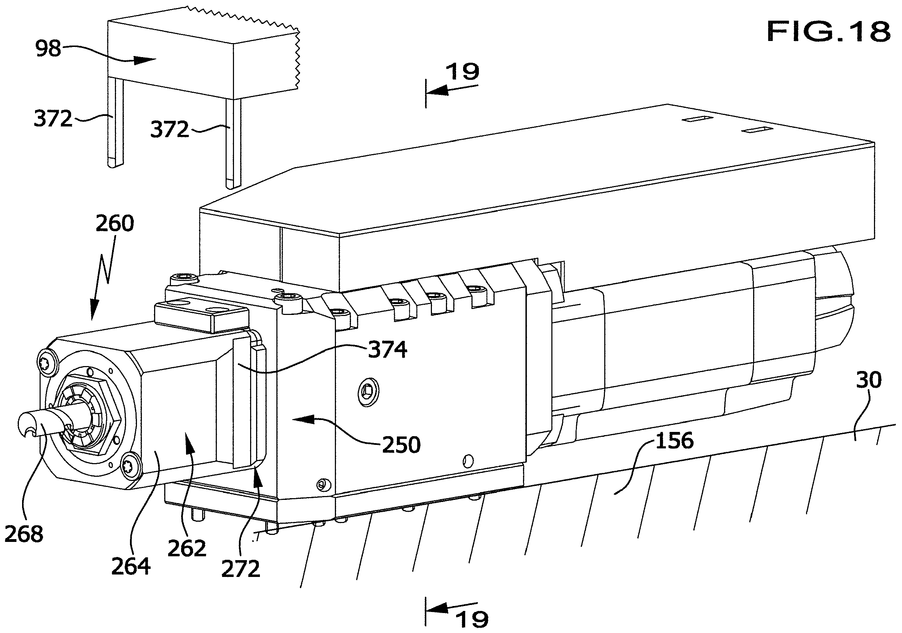

Bei einem weiteren Ausführungsbeispiel einer erfindungsgemäßen Werkzeugmaschine ist auf Werkzeugschlittensystem 30 als ein weiteres Beispiel der Werkzeughalteraufnahme 92 eine als Ganzes mit 250 bezeichnete Werkzeughalteraufnahmeeinheit vorgesehen, die fest auf dem Werkzeugträgerschlittensystem 30 montiert ist (Fig. 18).

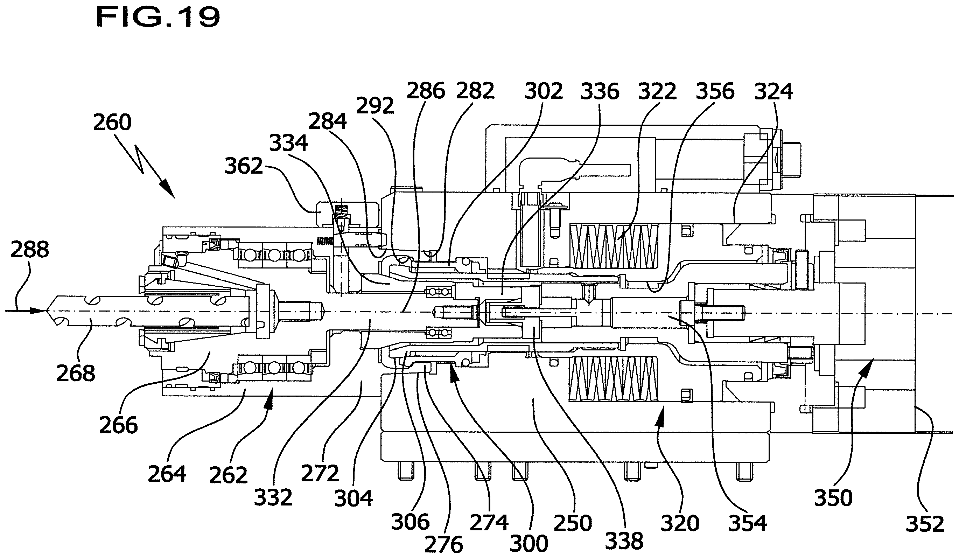

In die Werkzeughalteraufnahmeeinheit 250 ist als ein weiteres Beispiel für einen Werkzeughalter 90 ein als Ganzes mit 260 bezeichneter Werkzeughalter einsetzbar, der seinerseits ein Werkzeughaltergehäuse 262 aufweist das einen Werkzeughaltekörper 264 umfasst, wobei in dem Werkzeughaltekörper 264 eine als Werkzeugaufnahmeelement eine Werkzeugspindel 266 drehbar gelagert ist, welche ein Werkzeug 268 trägt (Fig. 19).

Das Werkzeughaltergehäuse 262 weist dabei einen Werkzeughaltermontagekörper 272 auf, an welchem ein Hohlschaftkegel 272 angeordnet ist, der seinerseits eine radial außenliegende Kegelfläche 276 aufweist und somit in eine Kegelaufnahme 282 der Werkzeughalteraufnahmeeinheit 250 einsetzbar ist, die eine radial innenliegende Kegelfläche 284 aufweist.

Im in die Kegelaufnahme 282 eingesetzten Zustand fallen eine Kegelachse des Hohlschaftkegels 272 und eine Kegelachse der Kegelaufnahme 282 zu einer gemeinsamen Kegelachse 286 zusammen, die außerdem eine Einsetzrichtung 288 für das Einsetzen des Werkzeughalters 260 in die Werkzeughalteraufnahmeeinheit 250 vorgibt.

Zur Fixierung des Werkzeughaltermontagekörpers 272 im Bereich des Hohlschaftkegels 274 ist dieser mit einer radial innenliegenden Spannkontur 292 versehen, mit welcher eine in der Werkzeughalteraufnahmeeinheit 250 vorgesehene Spanneinheit 300 zusammenwirkt, welche so ausgebildet ist, dass diese in der Lage ist, den Hohlschaftkegel 274 soweit in die Kegelaufnahme 282 einzuziehen, dass eine radiale Verspannung zwischen der Kegelfläche 276 des Hohlschaftkegels 274 und der Kegelfläche 284 der Kegelaufnahme 282 auftritt und somit der Werkzeughalter 260 in der Werkzeughalteraufnahmeeinheit 250 festlegbar ist.

Die Spanneinheit 300 weist vorzugsweise einen Greiferfingersatz 302 auf, der durch eine radial zum Greiferfingersatz 302 innenliegende Spannkegelfläche 304 beaufschlagbar ist, welche an einer beispielsweise radial innerhalb des Greiferfingersatzes 302 angeordneten Spannhülse 306 angeordnet ist.

Dabei ist die Spannhülse 306 parallel zu der Kegelachse 286 bewegbar angeordnet.

Durch die Bewegung der Spannhülse 306 parallel zur Kegelachse 286 ist der Greiferfingersatz 302 derart beaufschlagbar, dass dieser mit der Spannkontur 292 des Hohlschaftkegels 274 zusammenwirkt.

Der Hohlschaftkegel 274, die Kegelaufnahme 282 sowie die Spanneinheit 300 und die Spannkontur 292 bilden die Fixiervorrichtung 180.

Zur Betätigung der Spanneinheit 300, insbesondere der Spannhülse 306 derselben, ist eine von der Maschinensteuerung 80 angesteuerte Spannbetätigungseinheit 320 vorgesehen, welche mit der Spannhülse 306 gekoppelt ist.

Dabei weist die Spannbetätigungseinheit 320 einerseits ein Federpaket 322 auf und andererseits eine Hydraulikzylindereinheit 324, wobei beispielsweise das Federpaket 322 auf die Hydraulikzylindereinheit 324 derart einwirkt, dass ohne Aktivierung der Hydraulikzylindereinheit 324 die Spannhülse 306 den Greiferfingersatz 302 derart spreizt, dass dieser mit der Spannkontur 292 zusammenwirkend den Hohlschaftkegel 274 in die Kegelaufnahme 282 in der beschriebenen Art und Weise einzieht.

Die Hydraulikzylindereinheit 324 ist dabei mittels der Maschinensteuerung 80 betreibbar, um durch Aktivieren der Hydraulikzylindereinheit 324 mittels Hydraulikmedium dem Federpaket 322 entgegenzuwirken und somit derart auf die Spanneinheit 300 einzuwirken, dass der Greiferfingersatz 302 in seine die den Hohlschaftkegel 274 freigebende Stellung übergeht, so dass der Werkzeughalter 260 aus der Werkzeughalteraufnahmeeinheit 250 entnommen werden kann.

Zum Antreiben der Werkzeugspindel 266 ist die Werkzeugspindel 266 mit einer Werkzeugantriebswelle 332 versehen, welche den Hohlschaftkegel 274 durchsetzt und dabei drehbar in einem Führungskörper 334 gelagert ist.

Vorzugsweise erstreckt sich dabei der Führungskörper 334 radial innerhalb der Spannhülse 306, so dass die Spannhülse 306 unabhängig relativ zum Führungskörper 334 bewegbar ist.

Ferner weist die Werkzeugantriebswelle 332 auf einer dem Werkzeughaltergehäuse 262 gegenüberliegenden Seite ein Kupplungselement 336 auf, welches über den Hohlschaftkegel 274 übersteht und mit einem Kupplungselement 338 eines als Ganzes mit 350 bezeichneten und von der Maschinensteuerung 80 angesteuerten Werkzeugantriebs zusammenwirkt, der beispielsweise einen vorzugsweise hydraulisch oder elektrisch betreibbaren Antriebsmotor 352 aufweist, dessen Antriebswelle 354 sich durch einen radial innenliegenden Durchlass 356 der Spannbetätigungseinheit 320 hindurch erstreckt und auf einer dem Werkzeugantrieb 350 abgewandten Seite der Spannbetätigungseinheit 320 das Kupplungselement 338 trägt, welches mit dem Kupplungselement 336 der Werkzeugantriebswelle 332 zur Bildung einer Kupplung 340 zusammenwirkt, um das Werkzeug 268 anzutreiben.

Auch der Werkzeugantrieb 350 ist dabei durch die Maschinensteuerung 80 ansteuerbar.

Ferner ist das Werkzeughaltergehäuse 262 noch mit einer Drehfixierung 362 versehen, welche bewirkt, dass beim Entnehmen des Werkzeughalters 260 aus der Werkzeughalteraufnahmeeinheit 250 die Werkzeugspindel 266 oder die Werkzeugantriebswelle 332 selbsttätig in ihrer Drehstellung blockiert werden und somit das Kupplungselement 336 in der Stellung festlegt, in welcher dieses aus dem Kupplungselement 338 durch eine Bewegung koaxial zur Antriebswelle 354 entfernt wurde.

Wird dabei gleichzeitig der Werkzeugantrieb 350 seitens der Maschinensteuerung 80 derart angesteuert, dass die Antriebswelle 354 ihre Drehstellung beibehält, so dass der Werkzeughalter 260 aufgrund der fixierten Drehstellung der Werkzeugspindel 266 oder der Werkzeugantriebswelle 332 wieder an die Antriebswelle 354 angekuppelt werden kann, da die Drehstellung der Kupplungselemente 336 und 338 unverändert beibehalten wurde.

Vorzugsweise erstreckt sich bei diesem Ausführungsbeispiel der erfindungsgemäßen Werkzeughalteraufnahmeeinheit 250 die Kegelachse 286, in Richtung von welcher der Werkzeughalter 260 beim Einsetzen und Entnehmen in die Kegelaufnahme 282 der Werkzeughalteraufnahmeeinheit 250 in der Einsetzrichtung 288 zu bewegen ist, radial zur Spindelachse 24 der jeweiligen Werkstückspindel 22, in welcher ein Werkstück W mit dem Werkzeug 268 des Werkzeughalters 260 bearbeitet werden soll.

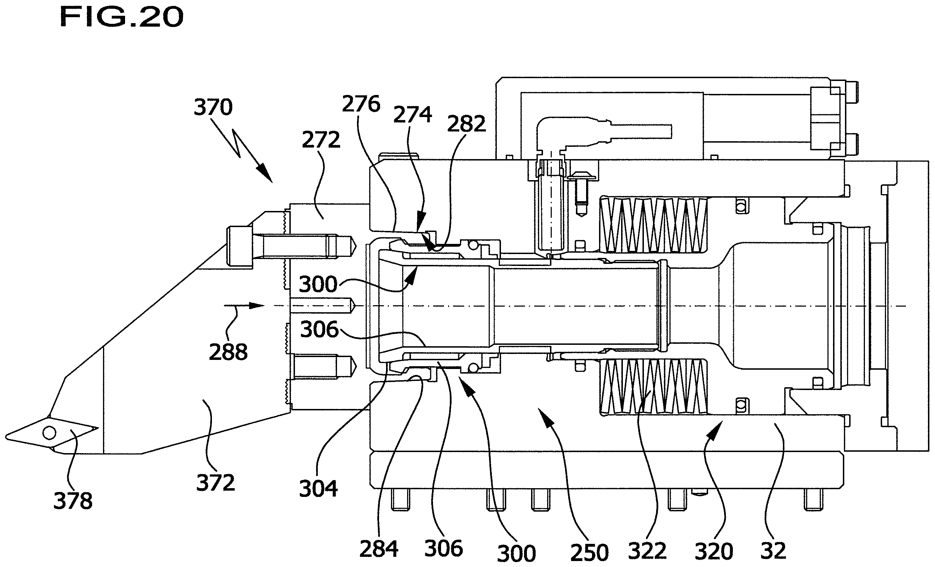

Alternativ zum Einsetzen des Werkzeughalters 260 mit einem rotierend antreibbaren Werkzeug 268 ist aber auch möglich, wie in Fig. 20 dargestellt, als Beispiel für den Werkzeughalter 90 einen Werkzeughalter 370 mit einem feststehenden Werkzeug 378 einzusetzen, wobei der Hohlschaftkegel 274 in gleicher Weise in die Kegelaufnahme 282 der Werkzeughalteraufnahmeeinheit 250 einsetzbar und mittels der Spanneinheit 300 sowie der Spannbetätigungseinheit 320 fixierbar ist.

Außerdem ist bei einem derartigen Werkzeughalter 370 der Werkzeugantrieb 350 wirkungslos, und wird daher auch nicht von der Maschinensteuerung 80 drehend angesteuert, sondern in der vorherigen Stellung feststehend gehalten.

Zum Auswechseln der Werkzeughalter 260 und 260' ist ein Werkzeughaltergreifer 98' vorgesehen, welcher Greiferfinger 372 aufweist, welche in Greifernuten 374 des Werkzeughaltergehäuses 262 eingreifen, um die Werkzeughalter 260 oder 260' zu handhaben (Fig. 18).

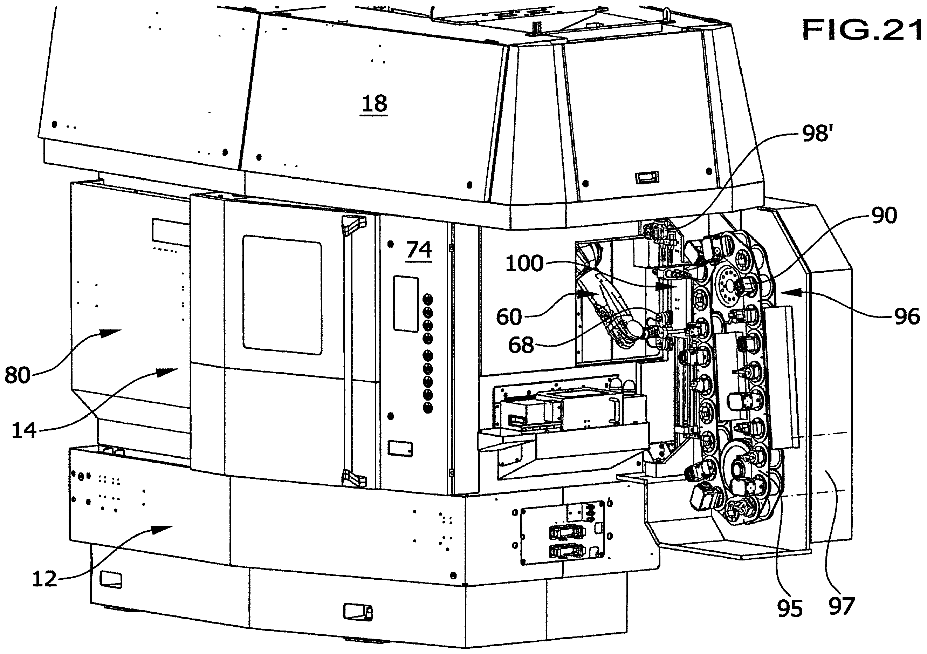

Auch bei diesem weiteren Ausführungsbeispiel ist, wie in Fig. 21 dargestellt, der Greiferspeicher 100 so ausgebildet, dass er einerseits in der Lage ist, den Werkzeughaltergreifer 98' aufzunehmen und andererseits auch den Werkstückgreifer 68.

Ferner ist außerhalb der Maschinenverhaubung 74 das Werkzeughaltermagazin 96 vorgesehen, in welchem die Werkzeughalter 90 zur Verfügung gestellt werden.

Ferner ist die Handhabungseinrichtung 60 so ausgebildet, dass sie einerseits in der Lage ist, den Werkstückgreifer 68 und den Werkzeughaltergreifer 98' gegeneinander auszuwechseln.

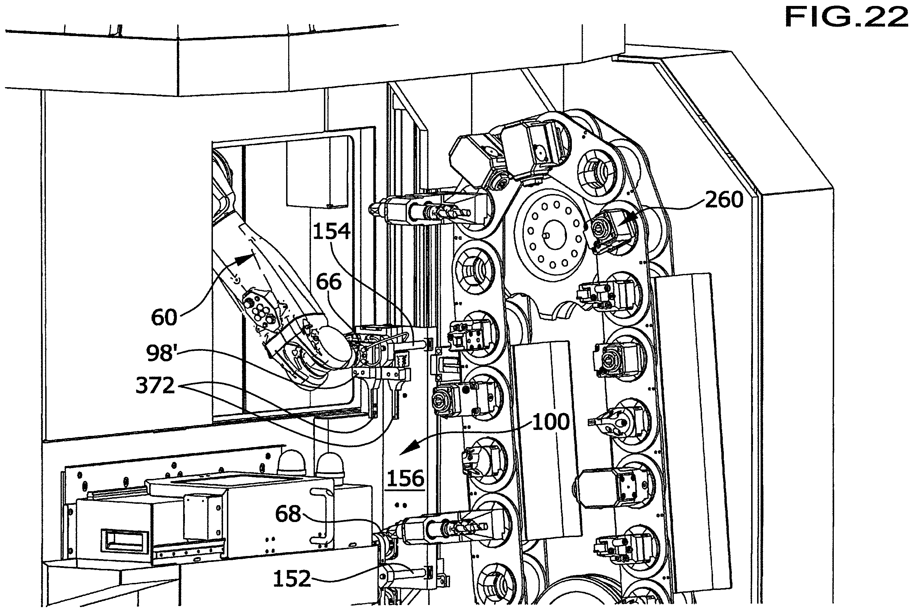

Wie in Fig. 22 dargestellt, ist bei diesem Ausführungsbeispiel sowohl die Werkstückgreiferaufnahme 152 als auch die Werkzeughaltergreiferaufnahme 154 auf dem Schlitten 156 des Greiferspeichers 100 angeordnet, so dass durch Verfahren des Greiferspeichers 100 entweder der Werkstückgreifer 68 als auch der Werkzeughaltergreifer 98' mittels des Schnellwechselsystems 110 von der Greiferaufnahme 66 aufgenommen werden können.

Die erfindungsgemäße Werkzeugmaschine arbeitet, programmgesteuert durch die Maschinensteuerung 80 wie folgt.

Zu Beginn einer Bearbeitung eines Werkstücks W wird beispielsweise in eine der in einer ausgewählten Spindelstation 26 stehenden Werkstückspindel 22 ein rohes Werkstück W durch eine durch die Spindel 22 von einer dem Arbeitsraum 50 gegenüberliegenden Seite hindurchgeschobenen Werkstückstange eingeführt, so lange, bis ein zu bearbeitendes Ende der Werkstückstange über die Stirnseite der Werkstückspindeln 22 zur Bearbeitung übersteht. Sodann wird die Werkstückstange in der Werkstückaufnahme 42 durch die Werkstückspanneinrichtung 44 dieser Werkstückspindel 22, programmgesteuert durch die Maschinensteuerung 80, gespannt.

Alternativ dazu lässt sich aber auch ein Werkstück W mittels der Handhabungseinrichtung 60 von Seiten des Arbeitsraums 50 in die jeweilige in einer bestimmten Spindelstation 26 stehende Werkstückspindel 22 einsetzen, wobei hierzu die Handhabungseinrichtung 60 mit der Greiferaufnahme 66 den Werkstückgreifer 68 in dem Greiferspeicher 100 aufnimmt und mittels des Werkstückgreifers 68 aus der Werkstückzu- und/oder -abfuhreinrichtung 72 das rohe Werkstück W durch Spannen mittels des Werkstückgreifers 68 aufnimmt, in den Arbeitsraum 50 einführt und von seitens des Arbeitsraums 50 in die Werkstückaufnahme 42 der Werkstückspindel 22 soweit einführt, dass das Werkstück W mittels der Werkstückspanneinrichtung 44 programmgesteuert durch die Maschinensteuerung 80 gespannt werden kann.

Danach erfolgt eine der Maschinensteuerung 80 durch ein Bearbeitungsprogramm vorgegebene Bearbeitung des Werkstücks W gegebenenfalls bereits in der Spindelstation 26, in welcher das Einsetzen des Werkstücks W erfolgte und auch in durch Weiterschalten der Spindeltrommel 16, das heißt Drehung um die Spindeltrommelachse 20, folgenden Spindelstationen 26, wobei jeweils eine Bearbeitung durch die den entsprechenden Spindelstationen 26 zugeordneten Werkzeugträger 28 erfolgt.

Das vorstehend beschriebene Einsetzen von rohen Werkstücken W kann nur in einer der Spindelstationen 26, aber auch beispielsweise in zwei oder mehr Spindelstationen 26 in der beschriebenen Art und Weise erfolgen.

Nach Bearbeitung des Werkstücks W erfolgt ein Entnehmen dieses Werkstücks W in der Spindelstation 26, in welcher das fertig bearbeitete Werkstück W zur Verfügung steht, aus der jeweiligen Werkstückspindel 22 mittels des Werkstückgreifers 68 durch die Handhabungseinrichtung 60, wobei hierzu die Handhabungseinrichtung 60 mit dem Werkstückgreifer 68 programmgesteuert durch die Maschinensteuerung 80 auf dieses Werkstück W zugreift, dann programmgesteuert durch die Maschinensteuerung 80 das Werkstück W greift und ebenfalls programmgesteuert durch die Maschinensteuerung 80 das mit dem Werkstückgreifer 68 gegriffene Werkstück W nach dem Lösen der Werkstückspanneinrichtung 44 durch die Maschinensteuerung 80 entlang eines programmierten Werkstückwechselpfades kollisionsfrei aus der Werkstückspindel 22 entnimmt und kollisionsfrei durch den Arbeitsraum 50 hindurch zu der Werkstückzu- und/oder -abfuhreinrichtung 72 transportiert und in dieser als fertig bearbeitetes Werkstück W ablegt.

Zusätzlich lässt sich bei der erfindungsgemäßen Werkzeugmaschine 10 aber auch ein Werkzeug 32 durch Auswechseln des dieses Werkzeug 32 haltenden Werkzeughalters 90 auswechseln, beispielsweise dann, wenn die Standzeit dieses Werkzeugs 32 überschritten ist oder wenn ein Werkzeugbruch festgestellt wurde oder wenn ein Umrüsten erfolgen soll.

Hierzu greift die Maschinensteuerung 80 mit der Handhabungseinrichtung 60 auf den Greiferspeicher 100 zu, legt in diesem den Werkstückgreifer 68 durch lösen des Schnellwechselsystems 100 ab und greift sich, beispielsweise durch Verschieben des Schlittensystems 156, den Werkzeughaltergreifer 98, mit welchem die Werkzeughalter 90 gegriffen werden können.

Anschließend erfolgt zum Auswechseln des Werkzeughalters 90 programmgesteuert durch die Maschinensteuerung 80 ein Zugreifen auf diesen Werkzeughalter 90, und zwar durch Bewegen des Werkzeughaltergreifers 98 längs eines Werkzeughalterwechselpfades kollisionsfrei durch den Arbeitsraum 50 und benachbarten Werkzeughaltern 90, der in dem jeweiligen Werkzeugträger 28 aufgenommen ist und ausgewechselt werden soll.

Hierzu erfolgt aber zunächst ein Verfahren des Schlittensystems 30 dieses Werkzeugträgers 28, programmgesteuert durch die Maschinensteuerung 80 in eine definierte Werkzeugwechselposition, die durch die Maschinensteuerung 80 ausgewählt wird oder der Maschinensteuerung 80 grundsätzlich vorgegeben ist.

Eine derartige definierte Werkzeugwechselposition ist erforderlich, um Kollisionen des Werkzeugs des auszuwechselnden Werkzeughalters 90 mit dem Werkstück W oder anderen Werkzeugen 32 oder Werkzeughaltern 90 beim Auswechseln des Werkzeughalters 90 zu vermeiden.

In dieser Werkzeugwechselposition des Schlittensystems 30 ist dann ein Zugriff seitens des Werkzeughaltergreifers 98 auf den Werkzeughalter 90 möglich, und es erfolgt ein Entnehmen dieses Werkzeughalters 90 aus der jeweiligen Werkzeughalteraufnahme 92, wobei das Entnehmen entgegengesetzt zur jeweiligen Einsetzrichtung erfolgt, die beispielsweise bei einem Werkzeughalter gemäß dem beispielhaften Werkzeughalter 160 oder 210 entgegengesetzt zur Einsetzrichtung 178 erfolgt, wobei die Einsetzrichtung 178 parallel zur jeweiligen Spindelachse 24 verläuft.

Bei den als Beispiele für einen Werkzeughalter 90 beschriebenen Werkzeughaltern 260 und 370 erfolgt dagegen eine Entnahme der jeweiligen Werkzeughalter 260 und 370 entgegengesetzt zu der Einsetzrichtung 288, die quer, vorzugsweise senkrecht zur jeweiligen Spindelachse 24 verläuft.

In diesem Fall ist somit die Werkzeugwechselposition des Schlittensystems 30 derart zu wählen, dass keine Kollision des jeweiligen Werkzeugs 268 oder 378 mit dem gegebenenfalls noch in der Werkstückspindel 22 vorhandenen Werkstück W erfolgt und nachfolgend, insbesondere nach Ausfahren des Hohlschaftkegels 274 aus der Kegelaufnahme 282, kann der entsprechende Werkzeughalter 260 beziehungsweise 370 mit einer Komponente in Richtung der Spindelachse 24 durch den Arbeitsraum 50 bewegt werden.

Um den auszuwechselnden Werkzeughalter 90 aus der Werkzeughalteraufnahme 92 entnehmen zu können, ist entweder beispielsweise bei einem der Werkzeughalter 160 oder 210 der Werkzeughalterspannantrieb 200 von der Maschinensteuerung 80 derart anzusteuern, dass die Spannung des Werkzeughalters 90 gelöst wird, oder beim Einsetzen des Werkzeughalters 160 oder 210 der Werkzeughalterspannantrieb 200 derart durch die Maschinensteuerung 80 anzusteuern, dass ein spannen des Werkzeughalters 160 oder 210 erfolgt.

Bei einem der Werkzeughalter 260 oder 370 ist seitens der Maschinensteuerung 80 die Spannbetätigungseinheit 320 derart anzusteuern, dass das Spannen des Hohlschaftkegels 274 gelöst wird, um den Werkzeughalter 260 oder 370 aus der Kegelaufnahme 282 entnehmen zu können, oder beim Einsetzen eines derartigen Werkzeughalters 260 oder 370, und zwar vor dem Einsetzen, die Spannbetätigungseinheit 320 ebenfalls so zu betätigen, dass die Spanneinheit 300 in der nichtspannenden Stellung steht und erst nach Einsetzen des jeweiligen Werkzeughalters 260 oder 370 die Spannbetätigungseinheit 320 so anzusteuern, dass ein Spannen des Hohlschaftkegels 274 durch die Spanneinheit 300 erfolgt, beispielhaft durch das auf die Spanneinheit 322 wirkende Federpaket.

Danach erfolgt ein Ablegen dieses Werkzeughalters 90 in dem Werkzeughaltermagazin 96 ebenfalls programmgesteuert durch die Maschinensteuerung 80 und ein nachfolgendes ebenfalls programmgesteuertes Aufnehmen eines Ersatzwerkzeughalters 90 und ein programmgesteuertes Einsetzen dieses Ersatzwerkzeughalters 90 in die Werkzeughalteraufnahme 92, aus welcher der Werkzeughalter 90 mit dem zu ersetzenden Werkzeug 32 entnommen wurde. Hierbei wird der Werkzeughaltergreifer 98 programmgesteuert durch die Maschinensteuerung 80 mittels der Handhabungseinrichtung 60 längs des Werzeughalterwechselpfades kollisionsfrei durch den Arbeitsraum 50 und zu benachbarten Werkzeugträgern 28 sowie Werkzeughaltern 90 bis in die in der Werkzeugwechselposition stehende Werkzeughalteraufnahme 92 bewegt und in diese eingesetzt.

Sowohl bei der Bewegung des Werkzeughaltergreifers 98 zum in der Werkzeugwechselposition stehenden zu ersetzenden Werkzeughalter 90 als auch beim Herausbewegen des zu ersetzenden Werkzeughalters 90 mittels des Werkzeughaltergreifers 98 und auch zum erneuten Einwechseln eines einzuwechselnden Werkzeughalters 90 in die Werkzeughalteraufnahme 92 des in der Werkzeugwechselposition stehenden Schlittensystems 30 ist seitens der Maschinensteuerung 80 die Handhabungsvorrichtung 60 so zu steuern, dass sich der Werkzeughaltergreifer 98 mit dem jeweiligen Werkzeughalter 90 kollisionsfrei einerseits durch den Arbeitsraum 50 und andererseits bis in die Werkzeughalteraufnahme 92 des in Werkzeugwechselposition stehenden Schlittensystems 30 bewegen kann.

Ein vorstehend beschriebener Werkstückwechselpfad oder ein Werkzeughaltereinwechsel- und -auswechselpfad, vereinfacht als Werkzeughalterwechselpfad bezeichnet, ist für jeden auszuwechselnden Werkzeughalter 90 seitens des Maschinensteuerung 80 programmgesteuert auszuführen und somit der Maschinensteuerung 80 vorab zu hinterlegen, um jegliche Kollisionen im Arbeitsraum 50 mit Komponenten der Werkzeugmaschine im Arbeitsraum, insbesondere aber auch Kollisionen mit Werkstücken W und anderen eingesetzten Werkzeughaltern 90 zu vermeiden.

Ein derartiges Hinterlegen des Werkstückwechselpfades und/oder des Werkzeughalterwechselpfades, der von dem Werkstückgreifer 68 mit oder ohne gegriffenes Werkstück W oder dem Werkzeughaltergreifer 98 mit und ohne von diesem gegriffenen Werkzeughalter 90 zu durchlaufen ist, ist entweder durch präzise manuelle Programmierung der Maschinensteuerung 80 unter Berücksichtigung der Gesamtkonfiguration der Werkzeugmaschine 10 zu hinterlegen oder durch einen für jedes zu wechselnde Werkstück W in der jeweiligen Werkstückspindel 22 und/oder jeden auszuwechselnden Werkzeughalter 90 in der jeweiligen Werkzeughalteraufnahme 92 manuell vorzunehmenden Lernvorgang bezüglich der Bewegung des Werkstückgreifers 68 oder des Werkzeughaltergreifers 98 mit und ohne dem Werkzeughalter 90 in der Maschinensteuerung 80 zu hinterlegen.

## Patentansprüche

1. Mehrspindel-Werkzeugmaschine, umfassend ein Maschinengestell (10), eine am Maschinengestell (10) um eine Spindeltrommelachse (20) drehbar angeordnete Spindeltrommel (16) mit mehreren Werkstückspindeln (22), die mit jeweils einer Werkstückaufnahme (42) für ein in einem Arbeitsraum (50) zu bearbeitendes Werkstücks (W) versehen sind, mehrere in dem Arbeitsraum (50) angeordnete, insbesondere einzelnen Spindelstationen zugeordnete Werkzeugträger (28) mit jeweils einer Werkzeughalteraufnahme (92), in welche ein Werkzeughalter (90) einsetzbar ist, sowie eine Maschinensteuerung (80) zur Steuerung der Werkzeugmaschine,
**dadurch gekennzeichnet, dass** an dem Maschinengestell (10) eine Handhabungseinrichtung (60) angeordnet ist, dass mit der Handhabungseinrichtung (60), ebenfalls gesteuert durch die Maschinensteuerung (80), mindestens ein Werkzeughalter (90) in mindestens eine der Werkzeughalteraufnahmen (92) einsetzbar und/oder aus dieser entnehmbar ist, dass insbesondere die Handhabungseinrichtung (60) als eine mehrachsige Handhabungseinrichtung (60) ausgebildet ist.

2. Werkzeugmaschine nach Anspruch 1, **dadurch gekennzeichnet, dass** die Handhabungseinrichtung (60) so ausgebildet ist, dass sie auf mehrere Werkzeughalteraufnahmen (92) zum Einsetzen und/oder Entnehmen eines Werkzeughalters (90) zugreifen kann, dass insbesondere die Handhabungseinrichtung (60) so ausgebildet ist, dass sie auf mehreren Spindelstationen zugeordnete Werkzeughalteraufnahmen (92) zum Einsetzen und/oder Entnehmen eines Werkzeughalters (90) zugreifen kann.

3. Werkzeugmaschine nach einem der voranstehenden Ansprüche, **dadurch gekennzeichnet, dass** die Handhabungseinrichtung (60) mit einer Bewegungskomponente parallel zu den Werkstückspindelachsen beim Einsetzen und/oder Entnehmen des jeweiligen Werkzeughalters in dem Arbeitsraum (50) verfährt, dass insbesondere die Handhabungseinrichtung (60) von einer der Spindeltrommel (16) abgewandten Seite des Arbeitsraums (50) in den Arbeitsraum (50) zum Einsetzen und/oder Entnehmen des jeweiligen Werkzeughalters (90) einfährt, dass insbesondere der Werkzeughalter (90) in die jeweilige Werkzeughalteraufnahme (92) in einer ungefähr parallel zu der Spindeltrommelachse (20) verlaufenden Einsetzrichtung (178) einsetzbar ist.

4. Werkzeugmaschine nach einem der voranstehenden Ansprüche, **dadurch gekennzeichnet, dass** der Werkzeughalter (90) in die Werkzeughalteraufnahme (92) in Richtung quer zu der Spindeltrommelachse (20) verlaufenden Einsetzrichtung (288) einsetzbar ist, die insbesondere von der Spindeltrommelachse (20) weg verläuft.

5. Werkzeugmaschine nach einem der voranstehenden Ansprüche, **dadurch gekennzeichnet, dass** mit der Maschinensteuerung (80) eine Fixiervorrichtung (180) zur Fixierung des Werkzeughalters (90) in der Werkzeughalteraufnahme (92) steuerbar ist.

6. Werkzeugmaschine nach einem der voranstehenden Ansprüche, **dadurch gekennzeichnet, dass** zur Bildung der Fixiervorrichtung (180) die Werkzeughalteraufnahme (92) und der Werkzeughalter (90) zusammenwirkende Formschlusselemente (176, 182, 184, 292, 300) aufweisen, welche bei einem Einsetzen des Werkzeughalters (90) in die Werkzeughalteraufnahme (92) formschlüssig in Eingriff bringbar sind, dass insbesondere der Werkzeugträger (28) einen Werkzeugschlitten (156) mit einer sich in diesen hinein erstreckenden Fixieraufnahme (174) aufweist, in welche ein Fixierkörper (176) des Werkzeughalters (160) durch Bewegen desselben in einer Einsetzrichtung (178) einsteckbar und in einem eingesetzten Zustand durch Fixierung desselben in der Fixieraufnahme (174) durch ein Formschlusselement (182) festlegbar ist, dass insbesondere das Formschlusselement ein Fixierkeilkörper (182) ist, der in dem Werkzeugschlitten (156) in einer quer zur Einsetzrichtung (178) verlaufenden Bewegungsrichtung zwischen einer Freigabestellung und einer Fixierstellung bewegbar ist, und dass der Fixierkeilkörper (182) in der Fixierstellung mit einer Keilaufnahme (184) des Fixierkörpers (176) zusammenwirkt, dass insbesondere der Fixierkeilkörper (182) in dem Werkzeugschlitten (156) linear bewegbar geführt ist und mit einer Keilfläche (186) auf eine Keilfläche (188) der Keilaufnahme (184) des Fixierkörpers (176) wirkt, dass insbesondere der Fixierkeilkörper (182) durch einen von der Maschinensteuerung (80) gesteuerten Antrieb (200) zwischen der Fixierstellung und der Freigabestellung bewegbar ist.

7. Werkzeugmaschine nach einem der voranstehenden Ansprüche 1 bis 6, **dadurch gekennzeichnet, dass** der Werkzeugträger (28) einen Werkzeugschlitten (156) mit einer Werkzeughalteraufnahme (250) aufweist, in die der Werkzeughalter (260, 370) in einer Einsetzrichtung (288) einsetzbar ist, welche in einer quer zur Werkstückspindelachse (24) verlaufenden Ebene liegt, dass insbesondere der Werkzeughalter (260, 370) einen Hohlschaftkegel (274) aufweist, welcher in die eine Kegelaufnahme (274) aufweisende Werkzeughalteraufnahme (250) einsetzbar ist, dass insbesondere der Hohlschaftkegel (274) eine Spannkontur (292) aufweist, mit welcher eine Spanneinheit (300) der Werkzeughalteraufnahme (250) zusammenwirkt, dass insbesondere die Spanneinheit (300) durch eine von der Maschinensteuerung (80) gesteuerte Spannbetätigungseinheit (320) in Richtung ihrer Spannstellung beaufschlagbar ist, in welcher diese den Hohlschaftkegel (274) spannend fixiert, dass insbesondere die Spanneinheit (300) in der Spannstellung den Hohlschaftkegel (274) in Richtung der Kegelachse (286) in die Kegelaufnahme (282) einzieht und radial zur Kegelachse (286) an die Kegelaufnahme (282) anpresst.

8. Werkzeugmaschine nach einem der voranstehenden Ansprüche, **dadurch gekennzeichnet, dass** an dem Werkzeugschlitten (30) ein von der Maschinensteuerung (80) gesteuerter Werkzeugantrieb (220, 350) stationär angeordnet ist, mit welchem eine drehbar in dem Werkzeughalter (90) gelagerte Werkzeugspindel (218, 266) antreibbar ist, dass insbesondere der Werkzeugantrieb (230, 350) mittels einer Kupplung (224, 340) mit der Werkzeugspindel (218, 266) kuppelbar ist, dass insbesondere die Kupplung (224, 340) derart ausgebildete Kupplungselemente aufweist, dass diese beim Einsetzen des Werkzeughalters (90) in die Werkzeughalteraufnahme (92) in Eingriff bringbar sind, dass insbesondere eines der Kupplungselemente (226, 338) eine sich quer zur Drehachse erstreckende Aufnahme und das andere der Kupplungselemente (228, 336) einen sich quer zur Drehachse erstreckenden Eingriff für die Aufnahme aufweist, dass insbesondere der Werkzeughalter (90) mit einer Drehfixierung (234, 362) zum drehfesten Festlegen der drehbaren Werkzeugspindel (216, 266) versehen ist, dass insbesondere die Drehfixierung (234, 362) bei in der Werkzeughalteraufnahme (92) fixiertem Werkzeughalter (90) selbsttätig in einer inaktiven Stellung steht und beim Lösen des fixierten Werkzeughalters selbsttätig in eine aktive drehfixierende Stellung übergeht.

9. Werkzeugmaschine nach einem der voranstehenden Ansprüche, **dadurch gekennzeichnet, dass** mit der Handhabungseinrichtung (60) die Werkzeughalter (90) gesteuert durch die Maschinensteuerung (80) in ein Werkzeughaltermagazin (96) einsetzbar oder aus diesem entnehmbar sind, dass insbesondere das Werkzeughaltermagazin (96) ein durch einen Antrieb (97) bewegbares Magazinelement (95) zur Aufnahme der Werkzeughalter (90) aufweist, und dass der Antrieb (97) von der Maschinensteuerung steuerbar ist, dass insbesondere das Werkzeughaltermagazin (96) außerhalb des Arbeitsraums (50) angeordnet ist.

10. Werkzeugmaschine nach einem der voranstehenden Ansprüche, **dadurch gekennzeichnet, dass** die Werkzeugträger (28) Spindelstationen (26) zugeordnet sind, in denen die Werkstückspindeln (22) zur Bearbeitung der in den Werkstückaufnahmen (42) gehaltenen Werkstücke (W) positionierbar sind, dass insbesondere der mindestens eine Werkzeugträger (28) ein die Werkzeughalteraufnahme (92) tragendes von der Maschinensteuerung (80) gesteuertes Werkzeugschlittensystem (30) aufweist, dass insbesondere das Werkzeugschlittensystem (30) mindestens in einer X-Bearbeitungsrichtung relativ der Werkstückspindel (22) bewegbaren Werkzeugschlitten aufweist.

11. Werkzeugmaschine nach einem der voranstehenden Ansprüche, **dadurch gekennzeichnet, dass** die Handhabungseinrichtung (60) eine Greiferaufnahme (66) aufweist, mittels welcher die Handhabungseinrichtung (60) einen von der Maschinensteuerung (80) gesteuerten Werkzeughaltergreifer (98) aufnehmen kann, dass insbesondere der Werkzeughaltergreifer (98) in einer Werkzeughaltergreiferaufnahme (154) eines Greiferspeichers (100) ablegbar ist, dass insbesondere der Greiferspeicher (100) außerhalb des Arbeitsraums (50) angeordnet ist, dass insbesondere die Maschinensteuerung (80) erfasst, ob der Werkzeughaltergreifer (98) in der Greiferaufnahme (66) der Handhabungseinrichtung (60) aufgenommen ist, dass insbesondere die Maschinensteuerung (80) eine Codierung am Werkzeughaltergreifer (98) erfasst, dass insbesondere die Maschinensteuerung (80) den Werkzeughaltergreifer (98) aufgrund von dessen Position im Greiferspeicher (100) erfasst.

12. Werkzeugmaschine nach einem der voranstehenden Ansprüche, **dadurch gekennzeichnet, dass** diese eine an dem Maschinengestell (10) vorgesehene Handhabungseinrichtung (60) aufweist, mit welcher Werkstücke (W), gesteuert durch die Maschinensteuerung (80), in mindestens eine der Werkstückspindeln (22) einsetzbar und/oder aus dieser entnehmbar sind, dass insbesondere die Maschinensteuerung (80) die Handhabungseinrichtung (60) bei einem Werkstückwechsel steuert, dass insbesondere die Handhabungseinrichtung (60) eine Greiferaufnahme (66) aufweist, mittels welcher die Handhabungseinrichtung (60) einen Werkstückgreifer (68) aufnehmen kann, dass insbesondere der Werkstückgreifer (68) in einer Werkstückgreiferaufnahme (152) eines Greiferspeichers (100) ablegbar ist, dass insbesondere der Greiferspeicher (100) außerhalb des Arbeitsraums (50) angeordnet ist, dass insbesondere die Maschinensteuerung (80) erfasst, ob der Werkstückgreifer (68) in der Greiferaufnahme (66) der Handhabungseinrichtung (60) aufgenommen ist, dass insbesondere die Maschinensteuerung (80) eine Codierung am Werkstückgreifer (68) erfasst.

13. Werkzeugmaschine nach einem der voranstehenden Ansprüche, **dadurch gekennzeichnet, dass** die Maschinensteuerung (80) den Werkstückgreifer (68) aufgrund von dessen Position im Greiferspeicher (100) erfasst.

14. Werkzeugmaschine umfassend ein Maschinengestell (10), eine am Maschinengestell (10) gehaltene Werkstückspindel (22) mit einer Werkstückaufnahme (42) zur Aufnahme eines in einem Arbeitsraum (50) zu bearbeitenden Werkstücks (W), mindestens einen in dem Arbeitsraum (50) angeordneten Werkzeugträger (28) mit einer Werkzeughalteraufnahme (92), in welche ein Werkzeughalter (90) einsetzbar ist, eine an dem Maschinengestell (10) angeordnete mehrachsige Handhabungseinrichtung (60), mit welcher Werkstücke (W) in die Werkstückspindel (22) einsetzbar und/oder aus dieser entnehmbar sind, sowie eine Maschinensteuerung (80) zur Steuerung der Werkzeugmaschine und der Handhabungseinrichtung (60) bei einem Werkstückwechsel, **dadurch gekennzeichnet, dass** mit der Handhabungseinrichtung (60) ebenfalls gesteuert durch die Maschinensteuerung (80) mindestens ein Werkzeughalter (90) in die mindestens eine Werkzeughalteraufnahme (92) einsetzbar und aus dieser entnehmbar ist.

15. Verfahren zum Betreiben einer Werkzeugmaschine gemäß einem der voranstehenden Ansprüche, **dadurch gekennzeichnet, dass** die Maschinensteuerung (80), insbesondere unter Verwendung eines Programms oder Programmcodes, die Handhabungseinrichtung (60) derart steuert, dass die Handhabungseinrichtung (60) aus einem Werkzeughaltermagazin (96) mindestens einen Werkzeughalter (90) entnimmt und in mindestens eine Werkzeughalteraufnahme (92) des mindestens einen Werkzeugträgers (28) einsetzt und/oder einen Werkzeughalter (90) aus der Werkzeughalteraufnahme (92) entnimmt und in dem Werkzeughaltermagazin ablegt, dass insbesondere die Maschinensteuerung (80), insbesondere unter Verwendung eines Programms oder Programmcodes, die Handhabungseinrichtung (60) derart steuert, dass diese mit ihrer Greiferaufnahme (66) einen Werkzeughaltergreifer (98) aufnimmt, dass insbesondere die Maschinensteuerung (80), insbesondere unter Verwendung eines Programms oder Programmcodes, erfasst, ob in der Greiferaufnahme (66) ein Werkzeughaltergreifer (98) aufgenommen ist, dass insbesondere die Maschinensteuerung (80), insbesondere unter Verwendung eines Programms oder Programmcodes, die Handhabungseinrichtung (60) derart steuert, dass diese zum Wechseln zwischen einem ersten Werkzeughaltergreifer und einem zweiten Werkzeughaltergreifer (98) einen derselben in einem Greiferspeicher (100) ablegt und den anderen derselben aus dem Greiferspeicher (100) entnimmt, dass insbesondere die Maschinensteuerung (80), insbesondere unter Verwendung eines Programms oder Programmcodes, mittels der Handhabungseinrichtung (60) eine Codierung am Werkzeughaltergreifer (98) erfasst, dass insbesondere die Maschinensteuerung (80), insbesondere unter Verwendung eines Programms oder Programmcodes, aufgrund der Position des jeweiligen Werkzeughaltergreifers (98) in dem Greiferspeicher (100) diesen identifiziert.

16. Verfahren zum Betreiben einer Werkzeugmaschine nach einem der voranstehenden Ansprüche oder nach Anspruch 15, **dadurch gekennzeichnet, dass** die Maschinensteuerung (80), insbesondere unter Verwendung eines Programms oder Programmcodes, die Handhabungseinrichtung (60) derart steuert, dass diese mindestens einen Werkzeughalter (90) in ein Werkzeughaltermagazin (96) einsetzt oder aus diesem entnimmt, dass insbesondere die Maschinensteuerung (80), insbesondere unter Verwendung eines Programms oder Programmcodes, mittels eines Antriebs (97) ein Magazinelement (95) des Werkzeughaltermagazins (96) so bewegt, dass mittels der Handhabungseinrichtung (60) ein Zugriff auf einen definierten Werkzeughalter (90) in dem Magazinelement (95) möglich ist, dass insbesondere die Maschinensteuerung (80), insbesondere unter Verwendung eines Programms oder Programmcodes, ein Werkzeugschlittensystem (30) des Werkzeugträgers (28) derart bewegt, dass dessen Werkzeughalteraufnahme (92) in einer Wechselposition zum Auswechseln des Werkzeughalters (90) steht, dass insbesondere die Maschinensteuerung (80), insbesondere unter Verwendung eines Programms oder Programmcodes, die Handhabungseinrichtung (60) derart steuert, dass diese einen Werkzeughalter (90) in die in der Wechselposition stehende Werkzeughalteraufnahme (92) einsetzt oder aus dieser entnimmt, dass insbesondere die Maschinensteuerung (80), insbesondere unter Verwendung eines Programms oder Programmcodes, die Handhabungseinrichtung (60) derart steuert, dass diese den Werkzeughalter (90) in die Werkzeughalteraufnahme (92) in einer ungefähr parallel zu einer Werkstückspindelachse (24) der jeweiligen Werkstückspindel (22) verlaufenden Einsetzrichtung (178) einsetzt oder entgegengesetzt zu dieser Einsetzrichtung aus dieser entnimmt, dass insbesondere die Maschinensteuerung (80), insbesondere unter Verwendung eines Programms oder Programmcodes, die Handhabungseinrichtung (60) derart steuert, dass diese den Werkzeughalter (90) in die Werkzeughalteraufnahme (92) in einer Richtung quer zu einer Werkstückspindelachse (24) der jeweiligen Werkstückspindel (22) verlaufenden Einsetzrichtung (288) einsetzt oder entgegengesetzt zu dieser entnimmt.

17. Verfahren zum Betreiben einer Werkzeugmaschine nach einem der voranstehenden Ansprüche oder nach einem der Ansprüche 15 oder 16, **dadurch gekennzeichnet, dass** die Maschinensteuerung (80), insbesondere unter Verwendung eines Programms oder Programmcodes, eine Fixiervorrichtung (180) der Werkzeughalteraufnahme (92) derart ansteuert, dass diese einen in die Werkzeughalteraufnahme (92) eingesetzten Werkzeughalter (90) fixiert oder einen aus der Werkzeughalteraufnahme (92) zu entnehmenden Werkzeughalter (90) freigibt, dass insbesondere die Maschinensteuerung (80) insbesondere unter Verwendung eines Programms oder Programmcodes, einen Werkzeugantrieb (230, 250) für eine drehbar am Werkzeughalter (90) gehaltene Werkzeugspindel (216, 266) derart ansteuert, dass diese vor dem Einsetzen oder nach einem Entnehmen des Werkzeughalters (90) aus der Werkzeughalteraufnahme (92) in einer definierten Drehstellung steht und insbesondere stehen bleibt.

18. Verfahren zum Betreiben einer Werkzeugmaschine nach einem der voranstehenden Ansprüche oder nach einem der Ansprüche 15 bis 17, **dadurch gekennzeichnet, dass** die Maschinensteuerung (80), insbesondere unter Verwendung eines Programms oder Programmcodes, die Handhabungseinrichtung (60) derart steuert, dass diese den Werkzeughaltergreifer (98) beim Wechseln eines Werkzeughalters (90) durch den Arbeitsraum (50) bis zu der, insbesondere in einer Wechselposition stehenden, Werkzeughalteraufnahme (92) längs eines abgespeicherten Werkzeugwechselpfades bewegt, dass insbesondere die Maschinensteuerung (80), insbesondere unter Verwendung eines Programms oder Programmcodes, eine manuell gesteuerte oder manuell vorgegebene Bewegung des Werkzeughaltergreifers (98) erfasst und abspeichert und den Werkzeughaltergreifer (98) entsprechend dieses Werkzeugwechselpfades zu dieser Werkzeughalteraufnahme (92) bewegt.

19. Verfahren zum Betreiben einer Werkzeugmaschine gemäß einem der voranstehenden Ansprüche oder nach einem der Ansprüche 15 bis 18, **dadurch gekennzeichnet, dass** die Maschinensteuerung (80), insbesondere unter Verwendung eines Programms oder Programmcodes, ein oder die Handhabungseinrichtung (60) derart steuert, dass die Handhabungseinrichtung (60) Werkstücke (W) zumindest aus einer Werkstückspindel (22) entnimmt und einer Werkstückzu- und/oder - abfuhreinrichtung (72) übergibt, dass insbesondere die Maschinensteuerung (80), insbesondere unter Verwendung eines Programms oder Programmcodes, eine Werkstückspanneinrichtung (44) der Werkstückaufnahme (42) der jeweiligen Werkstückspindel (22) zum Entnehmen eines Werkstücks (W) deaktiviert oder nach dem Einsetzen eines Werkstücks (W) zum Spannen des Werkstücks (W) aktiviert, dass insbesondere die Maschinensteuerung (80), insbesondere unter Verwendung eines Programms oder Programmcodes, die Handhabungseinrichtung (60) derart steuert, dass diese den Werkstückgreifer (68) längs eines definiert vorgegebenen Werkstückwechselpfades durch den Arbeitsraum (50) zu der Werkstückspindel 22 bewegt, dass insbesondere die Maschinensteuerung (80), insbesondere unter Verwendung eines Programms oder Programmcodes, eine manuell gesteuerte oder manuell vorgegebene Bewegung des Werkstückgreifers (68) durch den Arbeitsraum (50) und zu der Werkstückspindel (22) als Werkstückwechselpfad erfasst, abspeichert und nachfolgend als abgespeicherten Wechselpfad für das Auswechseln eines Werkstücks (W) aus dieser Werkstückspindel (22) einsetzt.

20. Verfahren zum Betreiben einer Werkzeugmaschine nach einem der voranstehenden Ansprüche oder nach einem der Ansprüche 15 bis 19, **dadurch gekennzeichnet, dass** die Maschinensteuerung (80), insbesondere unter Verwendung eines Programms oder Programmcodes, die Handhabungseinrichtung (60) derart steuert, dass diese mit ihrer Greiferaufnahme (66) einen Wechsel zwischen einem Werkstückgreifer (68) und einem Werkzeughaltergreifer (98) oder zwischen zwei Werkstückgreifern oder zwischen zwei Werkzeughaltergreifern durchführt, dass insbesondere die Maschinensteuerung (80), insbesondere unter Verwendung eines Programms oder Programmcodes, erfasst, ob in der Greiferaufnahme (66) ein Werkstückgreifer (68) oder ein Werkzeughaltergreifer (98) aufgenommen ist.

21. Verfahren nach Anspruch 20, **dadurch gekennzeichnet, dass** die Maschinensteuerung (80), insbesondere unter Verwendung eines Programms oder Programmcodes, die Handhabungseinrichtung (60) derart steuert, dass diese zum Wechseln zwischen dem Werkstückgreifer (68) und dem Werkzeughaltergreifer (98) oder zwischen zwei Werkstückgreifern oder zwischen zwei Werkzeughaltergreifern einen derselben in dem Greiferspeicher (100) ablegt und den anderen derselben aus dem Greiferspeicher (100) entnimmt, dass insbesondere die Maschinensteuerung (80), insbesondere unter Verwendung eines Programms oder Programmcodes, mittels der Handhabungseinrichtung (60) eine Codierung am Werkstückgreifer (68) und/oder am Werkzeughaltergreifer (98) erfasst, dass insbesondere die Maschinensteuerung (80) insbesondere unter Verwendung eines Programms oder Programmcodes aufgrund der Position des Werkstückgreifers (68) oder des Werkzeughaltergreifers (98) in dem Greiferspeicher (100) diese identifiziert.

22. Verfahren zum Betreiben einer Werkzeugmaschine gemäß einem der voranstehenden Ansprüche oder nach einem der Ansprüche 14 bis 21, **dadurch gekennzeichnet, dass** die Maschinensteuerung (80), insbesondere unter Verwendung eines Programms oder Programmcodes, die Handhabungseinrichtung (60) derart steuert, dass die Handhabungseinrichtung (60) einerseits Werkstücke (W) zumindest aus einer Werkstückspindel (22) entnimmt und einer Werkstückzu- und/oder -abfuhreinrichtung (72) übergibt und andererseits die Handhabungseinrichtung (60) aus einem Werkzeughaltermagazin (96) mindestens einen Werkzeughalter (90) entnimmt und in mindestens eine Werkzeughalteraufnahme (92) des mindestens einen Werkzeugträgers (28) einsetzt.
